# EUROPEAN PATENT SPECIFICATION

(11) **EP 4 509 947 B1**
(45) Date of publication and mention of the grant of the patent: **11.11.2026**
(21) Application number: 24732385.0
(22) Date of filing: 05.06.2024
(51) Int. Cl.: G06F 1/16, C09J 7/00, C09J 9/00, H05K 5/06, H04M 1/02

(54) **ELECTRONIC APPARATUS INCLUDING WATERPROOFING STRUCTURE**
ELEKTRONISCHE VORRICHTUNG MIT WASSERABDICHTUNGSSTRUKTUR
APPAREIL ÉLECTRONIQUE COMPRENANT UNE STRUCTURE D'ÉTANCHÉIFICATION

(30) Priority: 30.06.2023 KR 20230084903; 24.07.2023 KR 20230096203
(43) Date of publication of application: 19.02.2025
(73) Proprietor: Samsung Electronics Co., Ltd, Suwon-si, Gyeonggi-do 16677 (KR)
(72) Inventor: CHO, Sunggun, Suwon-si, Gyeonggi-do 16677 (KR); KIM, Gyeongtae, Suwon-si, Gyeonggi-do 16677 (KR); BAIK, Jinwook, Suwon-si, Gyeonggi-do 16677 (KR); YOON, Byounguk, Suwon-si, Gyeonggi-do 16677 (KR)
(74) Representative: HGF
(86) International application number: PCT/KR2024/007682
(87) International publication number: WO 2025/005522

(56) References cited:
- JP-A- 2004 047 968
- JP-A- 2010 034 170
- KR-A- 20220 115 263
- KR-A- 20220 115 263
- KR-A- 20220 126 576
- KR-A- 20230 022 775
- KR-B1- 101 018 822

## Description

### [Technical Field]

Various embodiments of the disclosure relate to an electronic device including a waterproof structure.

### [Background Art]

As the functional gap between electronic devices from each manufacturer has markedly decreased, the electronic devices are gradually becoming slimmer in order to meet consumers' purchasing needs, and are being improved to increase the rigidity of the electronic devices, strengthen design aspects of the electronic devices, and differentiate the functional elements of the electronic devices. An electronic device may have a transformable structure that is convenient to carry and enables use of a large screen display when used. For example, the electronic device may include foldable electronic devices rotatably coupled to each other via a hinge device. The foldable electronic device needs to be designed to ensure efficient layout design and operational reliability of internal electronic components according to the folding operation.

KR 2022 0115263 A discloses an electronic device which comprises: a first housing including a first through hole; a second housing including a second through hole; at least one flexible circuit board passing through the first through hole and the second through hole; a first support bracket disposed between the flexible circuit board and a display to support the flexible circuit board while covering the first through hole; a second support bracket disposed between the flexible circuit board and the display to support the flexible circuit board while covering a second through hole; a first waterproof member disposed from the first support bracket toward a partial area of the first through hole to be inserted into the partial area of the first through hole; a second waterproof member facing the first waterproof member with the flexible circuit board interposed therebetween, and inserted into the remaining area of the first through hole; a third waterproof member disposed from the second support bracket toward a partial area of the second through hole, and inserted into the partial area of the second through hole; a fourth waterproof member facing a third waterproof member with the flexible circuit board interposed therebetween, and inserted into the remaining area of the second through hole; a first sealing member disposed on the first waterproof member and the second waterproof member; and a second sealing member disposed on the third waterproof member and the fourth waterproof member. KR 2022 0126576 A discloses an electronic device which may comprise: a hinge module; a first housing at least partially coupled to a first side of the hinge module and including a first substrate assembly; a second housing at least partially coupled to a second side of the hinge module, including a second substrate assembly, and configured to be foldable and unfoldable with the first housing using the hinge module; a flexible display supported on upper portions of the first housing and the second housing and configured to be foldable and unfoldable; at least one FPCB electrically connecting the first substrate assembly and the second substrate assembly; a through hole formed in the first housing to form a path through which the at least one FPCB passes; a first sealing member disposed to compress a first side surface of the at least one FPCB disposed in the through hole; and a second sealing member disposed to compress a second side surface of the at least one FPCB disposed in the through hole.

The above information may be presented as related art for the purpose of assisting in understanding the disclosure. No assertion or decision is made as to whether any of the above might be applicable as prior art with regard to the disclosure.

### [Disclosure of Invention]

### [Technical Problem]

An electronic device may include a foldable electronic device having a first housing, a second housing foldably connected to the first housing via a hinge device (e.g., a hinge module or a hinge assembly). The first housing and the second housing are rotatably coupled to each other through a hinge device, thereby ensuring operational reliability for a folded state and/or an unfolded state. The foldable electronic device may be operated in an in-folding type and/or in an out-folding type by rotating the first housing and the second housing in the range of 0 to 360 degrees relative to each other via the hinge device. The foldable electronic device may include a flexible display disposed to be supported by the first housing and the second housing in the state opened to 180 degrees.

The foldable electronic device may include a wiring member (e.g., a flexible printed circuit board (FPCB)) that electrically interconnects the first housing and the second housing. The wiring member may be disposed in the inner space of the hinge housing configured to accommodate the hinge device and may have a bent shape (e.g., a shape bent one or more times), which at least partially has resilience (e.g., restoring force), to accommodate a length that is deformed depending on the folding operation of the foldable electronic device. The wiring member may be disposed such that one end penetrates at least a portion of the first housing and is then electrically connected to a first substrate (e.g., a main substrate), and the other end penetrates at least a portion of the second housing and is then electrically connected to a second substrate (e.g., a sub-substrate).

The wiring member may be disposed to penetrate the through-holes provided in the first housing and the second housing, respectively, and then bypass into the inner space of the hinge housing. In this case, the through-holes through which the wiring member passes may weaken the waterproofing capability.

In order to improve the performance of waterproofing the through-holes, the wiring member and the through-holes may have structures to be bonded to each other via a waterproof member. For example, as the bonding surface increases, the waterproof performance may be improved, but when the bonding surface increases the volume of the electronic device increases, which may work against slimming.

In addition, the wiring member may be coupled to the first housing and disposed under hinge plates that support the flexible display. In this case, the electronic device may have a waterproof structure implemented with waterproof members integrated with the hinge plates and disposed to seal the through-holes.

However, this is only possible when the hinge plates are fixed to the first and second housings. For example, in order to support the bending portion of a recent flexible display that is folded into a water drop shape, it is necessary for the hinge plates to be rotated at a predetermined angle from the first and second housings (e.g., to be folded more than the first and second housings). Thus, it may be difficult to implement a waterproof structure for the wiring structure.

### [Solution to Problem]

Various embodiments of the disclosure may provide an electronic device including a waterproof structure that is capable of helping slim the electronic device.

Various embodiments may provide an electronic device including a waterproof structure that is capable of helping efficiently arrange peripheral electronic components.

However, the problems to be solved in the disclosure are not limited to the above-mentioned problems.

According to various embodiments, an electronic device may include a first housing including a first support member, a second housing including a second support member, a hinge device interconnecting the first housing and the second housing to be rotatable relative each other, a wiring member that penetrates through-holes provided in the first support member and the second support member, respectively, and is disposed to electrically interconnect the first housing and the second housing, a waterproof cover arranged to seal the through-holes and including a filling hole, a waterproof member disposed between the waterproof cover and the through-holes, and a waterproof filling member filled through the filling hole. The through-holes may at least partially include a first inclined surface, the wiring member may be disposed by being bonded to the first inclined surface via the waterproof member and the waterproof cover, and the waterproof filling member may be disposed to cover an edge of the wiring member.

According to various embodiments, an electronic device may include a first housing including a first support member, a second housing including a second support member, a hinge device interconnecting the first housing and the second housing to be rotatable relative each other, a flexible display disposed to be supported by the first housing and the second housing, a wiring member that penetrates through-holes provided in the first support member and the second support member, respectively, and is disposed to electrically interconnect the first housing and the second housing, a waterproof cover disposed to seal the through-holes, and a waterproof member disposed between the waterproof cover and the through-holes. The through-holes may at least partially include a first inclined surface, and the wiring member may be disposed by being bonded to the first inclined surface via the waterproof member and the waterproof cover.

### [Advantageous Effects of Invention]

In the electronic device according to exemplary embodiments of the disclosure, waterproofing performance can be improved by providing the inclined surface in the through-holes, and bonding the wiring member to the inclined surface via the waterproof member so that the bonding surface is increased compared that in a housing with the same thickness. In addition, the design freedom of the hinge plates can be guaranteed by providing the sealing structure that sealing the through-hole via a separate waterproof cover and the filling hole.

Various other effects understood directly or indirectly through the present document may be provided.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

With regard to the description of the drawings, the same or like reference signs may be used to designate the same or like elements.
FIG. 1A is a front perspective view illustrating an electronic device according to various embodiments in an unfolded or flat state.
FIG. 1B is a front view illustrating the electronic device in the unfolded state according to various embodiments of the disclosure.
FIG. 1C is a rear view illustrating the electronic device according to various embodiments of the disclosure in the unfolded state.
FIG. 2A is a perspective view illustrating the electronic device according to various embodiments of the disclosure in the folded state.
FIG. 2B is a perspective view illustrating the electronic device according to various embodiments of the disclosure in an intermediate state.
FIG. 3 is an exploded perspective view of the electronic device according to various embodiments of the disclosure.
FIGS. 4A and 4B are partial perspective views of an electronic device to which a wiring member according to various embodiments of the disclosure is applied.
FIG. 5 is a front perspective view of a waterproof cover according to various embodiments of the disclosure.
FIG. 6A is a rear perspective view of the waterproof cover according to various embodiments of the disclosure.
FIG. 6B is a cross-sectional view of the waterproof cover according to various embodiments of the disclosure taken along line 6b-6b in FIG. 6A.
FIG. 6C is a cross-sectional view of the waterproof cover according to various embodiments of the disclosure taken along line 6c-6c in FIG. 6A.
FIG. 6D is a cross-sectional view of the waterproof cover according to various embodiments of the disclosure taken along line 6d-6d in FIG. 6A.
FIG. 7A is a view illustrating a waterproof member according to various embodiments of the disclosure applied to the waterproof cover of FIG. 6A.
FIG. 7B is a cross-sectional view of the waterproof cover according to various embodiments of the disclosure taken along line 7b-7b in FIG. 7A.
FIG. 7C is a cross-sectional view of the waterproof cover according to various embodiments of the disclosure taken along line 7c-7c in FIG. 7A.
FIG. 7D is a cross-sectional view of the waterproof cover according to various embodiments of the disclosure taken along line 7d-7d in FIG. 7A.
FIGS. 8A to 8C are views illustrating a wiring member bonded to a through-hole according to various embodiments of the disclosure.
FIG. 9A is a partial perspective view of an electronic device illustrating a state in which a through-hole is sealed by the waterproof cover according to various embodiments of the disclosure.
FIG. 9B is a partial cross-sectional view of the electronic device according to various embodiments of the disclosure taken along line 9b-9b in FIG. 9A.
FIG. 9D is an enlarged view of area 9c of FIG. 9B according to various embodiments of the disclosure.
FIG. 10A is a front perspective view of a waterproof cover according to various embodiments of the disclosure.
FIG. 10B is a rear perspective view of the waterproof cover according to various embodiments of the disclosure.
FIG. 10C is a view illustrating a waterproof member according to various embodiments of the disclosure applied to the waterproof cover of FIG. 10B.
FIG. 10D is a partial perspective view of an electronic device to which the waterproof cover according to various embodiments of the disclosure is applied.
FIG. 11A is a partial perspective view of an electronic device illustrating a state in which a through-hole is sealed by a waterproof cover according to various embodiments of the disclosure.
FIG. 11B is a view of the electronic device in which the waterproof cover is applied to the through-hole according to various embodiments of the disclosure, viewed from the front side.
FIG. 11C is a partial cross-sectional view of the electronic device according to various embodiments of the disclosure taken along line 11c-11c in FIG. 11B.
FIG. 11D is a partial cross-sectional view of the electronic device according to various embodiments of the disclosure taken along line 11d-11d in FIG. 11B.
FIG. 12 is a view illustrating the configuration in an area 12 of the electronic device of FIG. 1A according to various embodiments of the disclosure.
FIG. 13A is a partial cross-sectional view of an electronic device according to various embodiments of the disclosure in the unfolded state.
FIG. 13B is a partial cross-sectional view of the electronic device according to various embodiments of the disclosure in the folded state.
FIG. 14A is a front perspective view of a waterproof cover according to various embodiments of the disclosure.
FIG. 14B is a rear perspective view of the waterproof cover according to various embodiments of the disclosure.
FIG. 15 is an exploded perspective view of an electronic device illustrating a state in which the waterproof cover of FIG. 14A according to various embodiments of the disclosure is applied to a through-hole.
FIG. 16A is a partial perspective view of an electronic device illustrating a state in which the through-hole is sealed by the waterproof cover of FIG. 14A according to various embodiments of the disclosure.
FIG. 16B is a partial cross-sectional view of the electronic device according to various embodiments of the disclosure taken along line 16b-16b in FIG. 16A.
FIG. 16C is a partial cross-sectional view of the electronic device according to various embodiments of the disclosure taken along line 16c-16c in FIG. 16A.

### [Mode for the Invention]

Hereinafter, embodiments of the disclosure will be described in detail with reference to the accompanying drawings so that those ordinarily skilled in the art to which the disclosure pertains can easily practice them. However, the disclosure may be implemented in many different forms without being limited to those embodiments described herein. In relation to the description of the drawings, identical or similar reference symbols may be used for the same or similar components. Additionally, in the drawings and related descriptions, descriptions of well-known functions and configurations may be omitted for clarity and brevity.

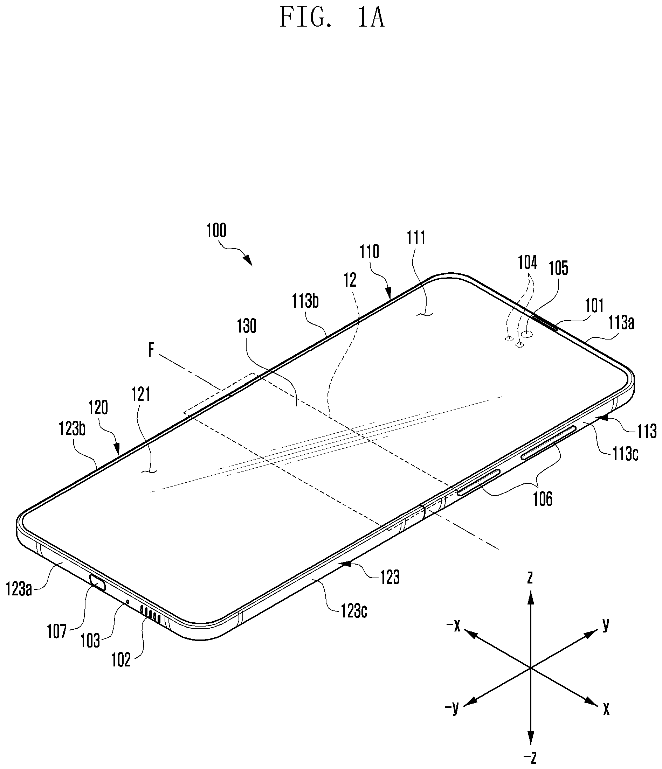

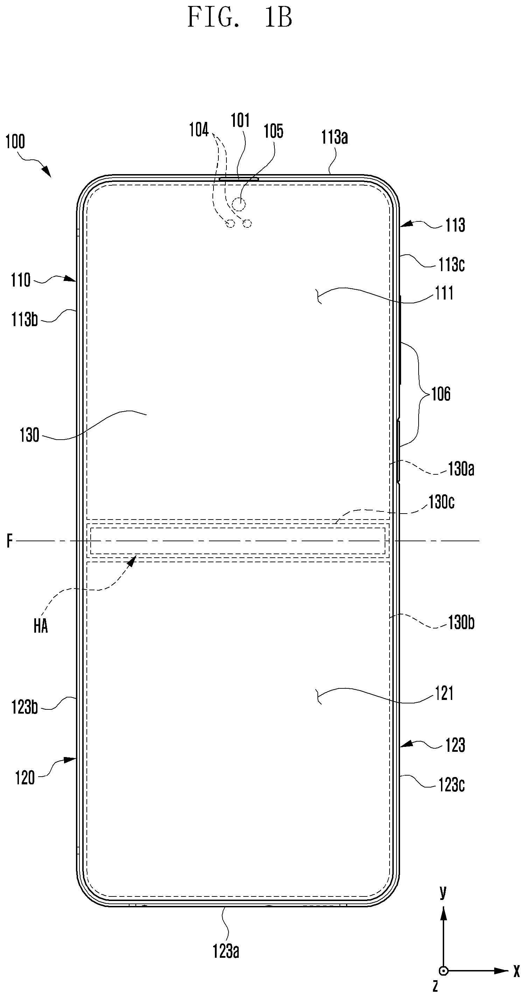

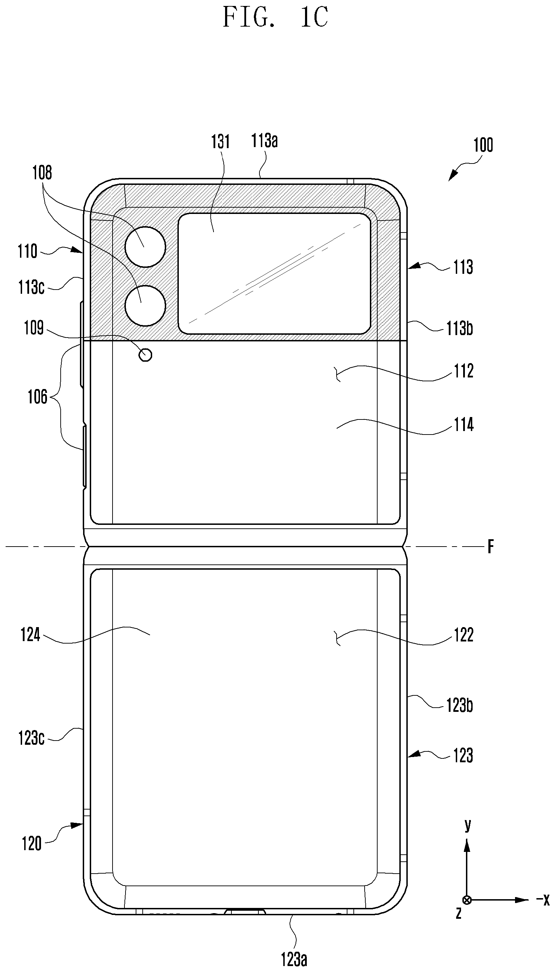

FIG. 1a is a perspective view of an electronic device illustrating a flat state or unfolded state of the electronic device according to various embodiments of the present disclosure. FIG. 1b is a plan view illustrating the front surface of an electronic device in an unfolded state according to various embodiments of the present disclosure. FIG. 1c is a plan view illustrating the rear surface of an electronic device in an unfolded state according to various embodiments of the present disclosure.

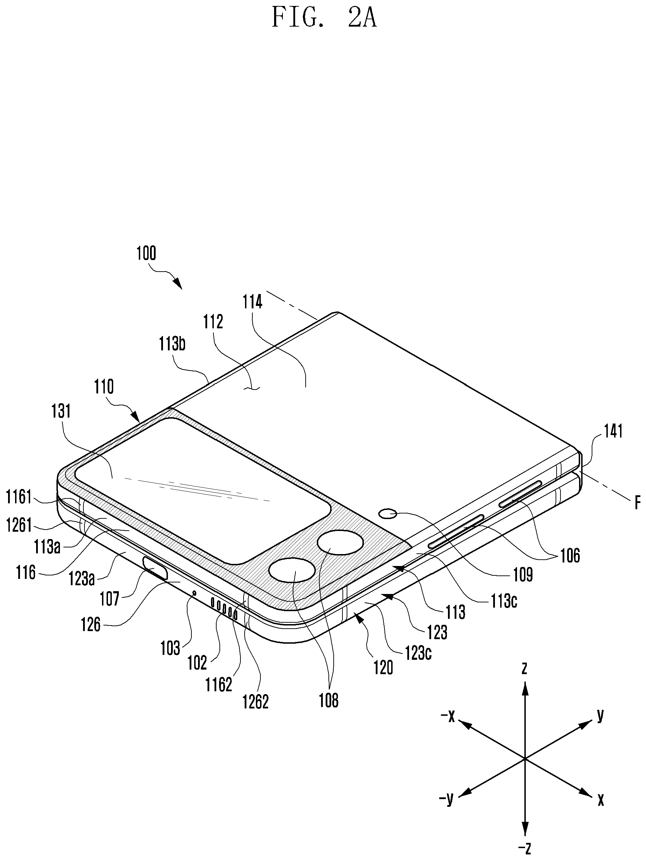

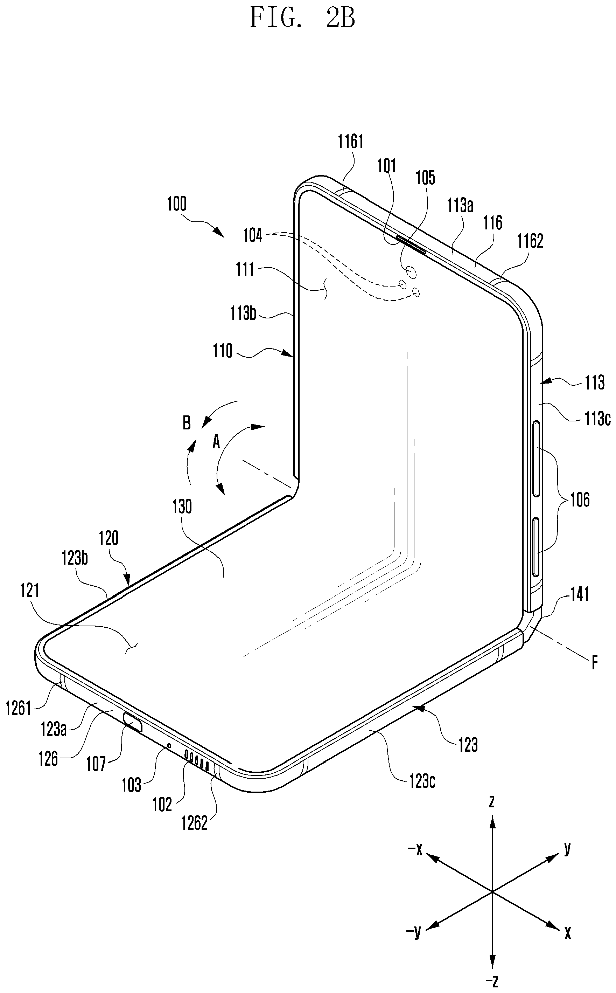

FIG. 2a is a perspective view of an electronic device illustrating a folded state of the electronic device according to various embodiments of the present disclosure. FIG. 2b is a perspective view of an electronic device illustrating an intermediate state of the electronic device according to various embodiments of the present disclosure.

With reference to FIGS. 1a to 2b, the electronic device 100 may include first and second housings 110 and 120 (e.g., a foldable housing structure) that are connected so that they can be folded with respect to each other based on a hinge device (e.g., the hinge device HA of FIG. 1b). In one embodiment, thehinge device (e.g., the hinge device HA of FIG. 1b) may be disposed in the direction of the X axis or in the direction of the Y axis. In one embodiment, the electronic device 100 may include a first display 130 (e.g., a flexible display, a foldable display, or a main display) disposed in an area (e.g., recess) formed by the first and second housings 110 and 120. In one embodiment, the first housing 110 and the second housing 120 may be disposed on opposite sides centered on the folding axis F and may have a shape that is substantially symmetrical with respect to the folding axis F. In one embodiment, the angle or distance between the first housing 110 and the second housing 120 may vary depending on the state of the electronic device 100. For example, depending on whether the electronic device is in a flat state or an unfolded state, a folded state, or an intermediate state, the first housing 110 and the second housing 120 may have different angles or distances formed from each other.

In one embodiment, the first housing 110 may include a first surface 111 facing the first direction (e.g., the front direction) (z axis direction) and a second surface 112 facing the second direction (i.e., the rear direction) (-z axis direction) opposite the first surface 111 in the unfolded state of the electronic device 100. In one embodiment, the second housing 120, in the unfolded state of electronic device 100, may include a third surface 121 facing the first direction (in the z-axis direction) and a fourth surface 122 facing the second direction (-z axis direction). In one embodiment, in the unfolded state of the electronic device 100, the first surface 111 of the first housing 110 and the third surface 121 of the second housing 120 may face substantially the same first direction (in the direction of the z axis).In one embodiment, in the folded state of the electronic device 100, the first surface 111 of the first housing 110 and the third surface 121 of the second housing 120 may face each other. In one embodiment, in the unfolded state of the electronic device 100, the second surface 112 of the first housing 110 and the fourth surface 122 of the second housing 120 may face substantially the same second direction (- z axis direction). In one embodiment, in the folded state of the electronic device 100, the second surface 112 of the first housing and the fourth surface 122 of the second housing 120 may face opposite each other. For example, in the folded state of electronic device 100, the second surface 112 may face the first direction (in the z axis), and the fourth surface 122 may face the second direction (-z axis direction).In this case, the first display 130 may not be visible from the outside (in folding mode). In one embodiment, the electronic device 100 may be folded so that the second surface 112 of the first housing 110 and the fourth surface 122 of the second housing 120 face each other. In this case, the first display 130 may be disposed to be viewed from the outside (out-folding).

According to various embodiments, the first housing 110 (e.g., the first housing structure) may include a first lateral member 113 that at least partially forms an exterior of the electronic device 100, and a first rear cover 114 that is coupled to the first lateral member 113 and forms at least portion of the second surface 112 of the electronic device 100. In one embodiment, the first lateral member 113 may include the first side surface 113a, the second side surface 113b extending from one end of the first side surface 113a, and the third side surface 113c extending from the other end of the first side surface 113a. In one embodiment, the first lateral member 113 may be formed into a quadrilateral (e.g., square or rectangular) shape through the first side surface 113a, the second side surface 113b, and the third side surface 113c.

According to various embodiments, the second housing 120 (e.g., the second housing structure) may include a second lateral member 123 that at least partially forms an exterior of the electronic device 100, and a second rear cover 124 that is at least partially coupled to the second lateral member 123, and a second lateral member 123 and forms at least portion of the fourth surface 122 of the electronic device 100. In one embodiment, the second lateral member 123 may include the fourth side surface 123a, the fifth side surface 123b extending from one end of the fourth side surface 123a, and the sixth side surface 123c extending from the other end of the fourth side surface 123a. In one embodiment, the second lateral member 123 may be formed into a quadrilateral shape through the fourth side surface 123a, the fifth side surface 123b, and the sixth side surface 123c.

According to various embodiments, the first and second housings 110, 120 are not limited to the illustrated shape and combination, and may be implemented by a combination and/or a coupling of other shapes or parts. In one embodiment, the first lateral member 113 may be integrally formed with the first rear cover 114, and the second lateral member 123 may be integrally formed with the second rear cover 124.

According to various embodiments, in the unfolded state of the electronic device 100, the second side surface 113b of the first lateral member 113 and the fifth side surface 123b of the second lateral member 123 may be connected without a gap. In one embodiment, in the unfolded state of the electronic device 100, the third side surface 113c of the first lateral member 113 and the sixth side surface 123c of the second lateral member 123 may be connected without a gap. In one embodiment, when electronic device 100 is unfolded, the sum of the lengths of the second side surface 113b and the fifth side surface 123b may be constituted to be longer than the length of the first side surface 113a and/or the fourth side surface 123a. In one embodiment, in the unfolded state of electronic device 100, the sum of the lengths of the third side surface 113c and the sixth side surface 123c may be constituted to be longer than the length of the first side surface 113a and/or the fourth side surface 123a.

With reference to FIG. 2a and FIG. 2b, the first lateral member 113 and/or the second lateral member 123 may contain more polymers formed from or injected into metal. In one embodiment, the first lateral member 113 and/or the second lateral member 123 may also include at least one conductive portion 116 and/or 126 electrically segmented through at least one segmentation portion 1161, 1162 and/or 1261, 1262 formed by the polymer. In such a case, at least one conductive portion 116 and/or 126 may be used as at least portion of an antenna operating in at least one band (e.g., legacy band) specified by an electrical connection with a radio communication circuit contained in electronic device 100.

According to various embodiments, the first rear cover 114 and/or the second rear cover 124 may be formed by a combination of at least one or at least two of the coated or colored glass, ceramics, polymers, or metals (e.g., aluminum, stainless steel (STS), or magnesium).

According to various embodiments, the first display 130 may be disposed to extend from the first surface 111 of the first housing 110 across the hinge device (e.g., the hinge device HA of FIG. 1b) to at least a portion of the third surface 121 of the second housing 120. In one embodiment, the first display 130 may substantially include a first area 130a corresponding to the first surface 111, a second area 130b corresponding to the second surface 112, and a third area 130c (e.g., a flexible area or folding area) connecting the first area 130a and the second area 130b.In one embodiment, the third area 130c may be disposed in a position corresponding to the hinge device (e.g., the hinge device HA of FIG. 1b) as part of the first area 130a and/or the second area 130b. In one embodiment, the electronic device 100 may include a hinge housing 141 (e.g., a hinge cover) supporting a hinge device (e.g., the hinge device HA of FIG. 1b). In one embodiment, the hinge housing 141 may be exposed to the outside when the electronic device 100 is in the folded state, and may be disposed invisibly from the outside by being inserted into the inner space of the first housing 110 and the inner space of the second housing 120when the electronic device 100 is in the unfolded state.

According to various embodiments, electronic device 100 may include a second display 131 (e.g., a sub display) that is disposed separately from the first display 130. In one embodiment, the second display 131 may be disposed on the second surface 112 of the first housing 110 to be at least partially exposed. In one embodiment, when the electronic device 100 is in a folded state, the second display 131 may display at least portion of the state information of the electronic device 100, replacing at least portion of the display function of the first display 130. In one embodiment, the second display 131 may be disposed so that it can be viewed from the outside through at least portion of the area of the first rear cover 114.In one embodiment, the second display 131 may be disposed on the fourth surface 122 of the second housing 120. In such a case, the second display 131 may be disposed so that it can be viewed from the outside through at least portion of the area of the second rear cover 124.

According to various embodiments, the electronic device 100 may include at least one of an input device 103 (e.g., microphone), a sound output device 101 and 102, a sensor module 104, a camera device 105 and 108, a keystroke device 106 or a connector port 107. In the illustrated embodiment, the input device 103 (e.g., microphone), the sound output device 101 and 102, the sensor module 104, the camera device 105 and 108, the keystroke device 106 or the connector port 107 are illustrated as holes or circular elements formed in the first housing 110 or second housing 120, but this is illustrative for the purpose of explanation and is not limited thereto. According to various embodiments, input device 103 may include at least one microphone 103 disposed in second housing 120. In one embodiment, input device 103 may include a plurality of microphones 103 that are disposed to detect the direction of sound. In one embodiment, a plurality of microphones 103 may be disposed in appropriate locations in the first housing 110 and/or the second housing 120. In one embodiment, sound output devices 101 and 102 may include at least one speaker 101 and 102.In one embodiment, at least one speaker 101 and 102 may include a call receiver 101 disposed in the first housing 110 and a speaker 102 disposed in the second housing 120. In one embodiment, input device 103, sound output device 101 and 102 and connector port 107 are disposed in a space provided in the first housing 110 and/or second housing 120 of the electronic device 100 and may be exposed to the external environment through at least one hole formed in the first housing 110 and/or second housing 120. In one embodiment, at least one connector port 107 may be used to transmit and receive power and/or data with an external electronic device. In one embodiment, at least one connector port (e.g., an earjack hole) may also accommodate a connector (e.g., an earjack) for transmitting and receiving audio signals with an external electronic device. In one embodiment, holes formed in first housings 110 and/or second housings 120 may be used for input devices 103 and sound outputs 101 and 102. In one embodiment, sound output devices 101 and 102 may also include speakers (e.g., piezo speakers) that are not exposed through holes formed in the first housing 110 and/or second housing 120.

According to various embodiments, the sensor module 104 may generate electrical signals or data values corresponding to the internal operating state of electronic device 100 or external environmental conditions. In one embodiment, the sensor module 104 may detect the external environment through the first surface 111 of the first housing 110. In one embodiment, the electronic device 100 may include at least one additional sensor module that is disposed to detect the external environment through the second surface 112 of the first housing 110. In one embodiment, sensor module 104 (e.g., an illuminance sensor) may be disposed under first display 130 to detect the external environment through first display 130.In one embodiment, the sensor module 104 may include at least one of the following gesture sensors, gyro sensors, barometric pressure sensors, magnetic sensors, acceleration sensors, grip sensors, color sensors, infrared (IR) sensors, biometric sensors, temperature sensors, humidity sensors, ambient light sensors, proximity sensors, biometric sensors, ultrasonic sensors, or ambient light sensors 104.

According to various embodiments, camera devices 105 and 108 may include a first camera device 105 (e.g., a front camera device) disposed on the first surface 111 of the first housing 110 and a second camera device 108 disposed on the second surface 112 of the first housing 110. In one embodiment, electronic device 100 may further include flash 109 disposed near second camera device 108. In one embodiment, camera devices 105 and 108 may include at least one lens, an image sensor, and/or an image signal processor. In one embodiment, camera devices 105 and 108 may be disposed so that two or more lenses (e.g., a wide-angle lens, an ultra-wide-angle lens, or a telephoto lens) and two or more image sensors are located on one surface of the electronic device 100 (e.g., the first surface 111, the second surface 112, the third surface 121), or the fourth surface 122).In one embodiment, the camera devices 105 and 108 may include lenses and/or image sensors for time of flight (TOF).

According to various embodiments, the keystroke device 106 (e.g., a key button) may be disposed on the third side surface 113c of the first lateral member 113 of the first housing 110. In one embodiment, the keystroke device 106 may be disposed on at least one side surface of the other side surfaces 113a and 113b and/or side surfaces 123a, 123b, and 123c of the second housing 120. In one embodiment, the electronic device 100 may not include some or all of the keystroke devices 106 and the non-contained keystroke device 106 may be implemented in another form, such as a soft key, on the first display 130. In one embodiment, the keystroke device 106 may be implemented using a pressure sensor included in first display 130.

According to various embodiments, some of the camera devices 105 and 108 (e.g., the first camera device 105) or sensor module 104 may be disposed to be exposed through the first display 130. In one embodiment, the first camera device 105 or sensor module 104 may be optically exposed to the outside through an opening (e.g., a through hole) formed at least partially on the first display 130 in the inner space of the electronic device 100. In one embodiment, at least portion of the sensor module 104 may be disposed in the inner space of the electronic device 100 so that it is not visually exposed through the first display 130.With reference to FIG. 2b, the electronic device 100 may be operated through a hinge device (e.g., the hinge device HA of FIG. 1b) to maintain at least one specified folding angle in the intermediate state. In such a case, electronic device 100 may control the first display 130 so that different contents are displayed in the display area corresponding to the first surface 111 and the display area corresponding to the third surface 121.In one embodiment, the electronic device 100 may operate in a substantially unfolded state (e.g., the unfolded state of FIG. 1a) and/or in a substantially folded state (e.g., the folded state of FIG. 2a) with respect to a certain folding angle (e.g., the angle between the first housing 110 and the second housing 120when the electronic device 100 is in an intermediate state) through a hinge device (e.g., the hinge device HA of FIG. 1b). In one embodiment, the electronic device 100 may be operated through a hinge device (e.g., the hinge device HA of FIG. 1b) to transition to an unfolded state (e.g., the unfolded state of FIG. 1a) when pressurized force is provided in the unfolding direction (A direction) at a certain folding angle. In one embodiment, the electronic device 100 may be operated through a hinge device (e.g., the hinge device HA of FIG. 1b) in an unfolded state at a certain folding angle, to transition to a folded state (e.g., a folding state of FIG. 2a) if pressing force is provided in the direction to be folded (B direction). In one embodiment, the electronic device 100 may be operated through a hinge device (e.g., the hinge device HA of FIG. 1b) to maintain an unfolded state (not shown) at various folding angles (free-stop function).

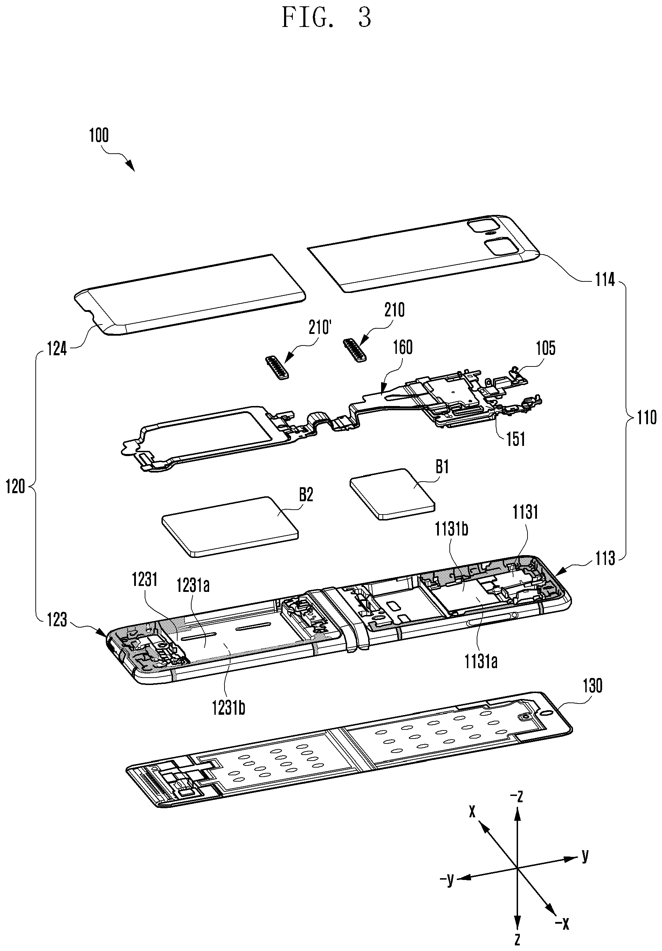

FIG. 3 is an exploded perspective view illustrating an electronic device according to various embodiments of the disclosure.

Referring to FIG. 3, an electronic device 100 may include a first housing 110 (e.g., a first housing structure) including a first side surface member 113 (e.g., a first side surface frame or a first side surface bezel), a second housing 120 (e.g., a second housing structure) foldably connected to the first housing 110 via a hinge device (e.g., a hinge module, a hinge structure, or a hinge assembly) and including a second side surface member 123 (e.g., a second side surface frame or a second side surface bezel), and a flexible display 130 arranged to be supported by the first housing 110 and the second housing 120.In an embodiment, the first housing 110 includes a first rear surface cover 114 coupled to the first side surface member 113. In an embodiment, the first housing 110 includes a first support member 1131 (e.g., a first support plate or a first extension member) having a first support surface 1131a at least partially extending from the first side surface member 113 and a second support surface 1131b facing away from the first support surface 1131a. In an embodiment, the second housing 120 includes a second rear surface cover 124 coupled to the second side surface member 123. In an embodiment, the first housing 120 includes a second support member 1231 (e.g., a second support plate or a second extension member) having a third support surface 1231a at least partially extending from the second side surface member 123 and oriented in the same direction as the first support surface 1131a in the unfolded state, and a fourth support surface 1231b facing away from the third support surface 1231a. In an embodiment, the first support member 1131 is configured integrally with the first side surface member 113 and may be structurally coupled to the first side surface member 113. In an embodiment, the second support member 1231 is configured integrally with the second side surface member 123 and may be structurally coupled to the second side surface member 123. In an embodiment, the flexible display 130 is arranged to be supported by the first support surface 1131a of the first support member 1131 and the third support surface 1231a of the second support member 1231. In an embodiment, the first side surface member 113 and the first rear surface cover 114 are integrally configured. In an embodiment, the second side surface member 123 and the second rear surface cover 124 are integrally configured. In an embodiment, the electronic device 100 includes another display (e.g., the second display 131 in FIG. 2A) provided in a space defined between the second support surface 1131b of the first support member 1131 and the first rear surface cover 114, and arranged to be visible from the outside through at least a partial area of the first rear surface cover 114. In various examples, the first housing 110 and the second housing 120 are considered to form a housing (i.e. an overall housing) of the electronic device 100; in which case this housing can be considered to include the individual components of the first housing 110 and the second housing 120 which are described above, in any of the configurations or arrangements described above.

According to various embodiments, the electronic device 100 includes a substrate 151 (e.g., a substrate assembly or a main printed circuit board) disposed in the space defined between the second support surface 1131b of the first support member 1131 and the first rear surface cover 114, and at least one electronic component (e.g., a camera module 105 or a battery B1) electrically connected to the substrate 151. In an embodiment, the electronic device 100 includes at least one electronic component (e.g., a battery B2) disposed in the space between the fourth support surface 1231b of the second support member 1231 and the second rear surface cover. In an embodiment, the electronic device includes a wiring member 160 (e.g., a flexible substrate, a FPCB, or a soft substrate) extending from the first housing to the second housing through the hinge device (e.g., the hinge device HA in FIG. 1b). The wiring member 160 may electrically connect or couple at least one electronic component disposed in the first housing to at least one electronic component disposed in the second housing. In an embodiment, the electronic device 100 includes a hinge housing (e.g., the hinge housing 141 in FIG. 2A) disposed in an area corresponding to the hinge device. In an embodiment, the hinge device is disposed to be invisible from the outside of the electronic device 100 by the hinge housing 141. At least a portion of the wiring member 160 may be disposed in a space defined by the hinge housing 141 to be elastically deformable and invisible from the outside.

According to various embodiments, the wiring member 160 is connected in a manner of penetrating a through-hole provided in the first support member 1131, then passing through an inner space between the hinge housing 141 and the hinge device, and then penetrating again a through-hole provided in the second support member 1231. In this case, the through-holes may be sealed with a waterproof structure to prevent moisture and/or foreign substances from entering from the outside in the state in which the wiring member 160 penetrates the through-holes. In an embodiment, the waterproof structure includes waterproof covers 210 and 210' (e.g., waterproof brackets, waterproof covers, or cover members) to seal the through-holes. In an embodiment, the wiring member 160 are fixed by being bonded inside the through-holes through at least one waterproof member. In an embodiment, the at least one waterproof member includes at least one of tape, adhesive, waterproof dispensing, silicon, waterproof rubber, and urethane.

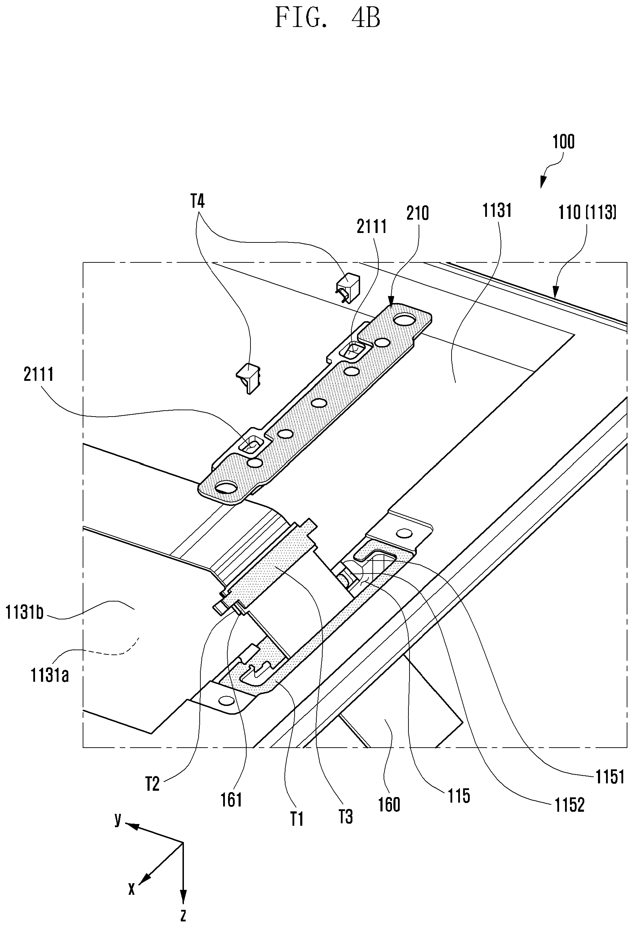

According to an exemplary embodiment of the disclosure, inside the through-holes, the wiring member 160 is bonded via an inclined surface (e.g., the first inclined surface 1152 in FIG. 4B) inclined at a predetermined angle with respect to the first support surface 1131a and/or the third support surface 1231a. That is, the inclined surface is a surface which is inclined at a predetermined angle with respect to the first support surface 1131a and/or the third support surface 1231a. For example, the bonding structure of the inclined surface 1152 provides a larger waterproof area than that in the case where the inner surfaces of the through-holes provided in the support members 1131 and 1231 having relatively the same thickness are vertical, thereby helping improve waterproof performance and slim the electronic device. In addition, the through-holes may be sealed by separate waterproof covers 210 and 210', thereby helping improve assemblability (e.g. ease or efficiency of assembly).

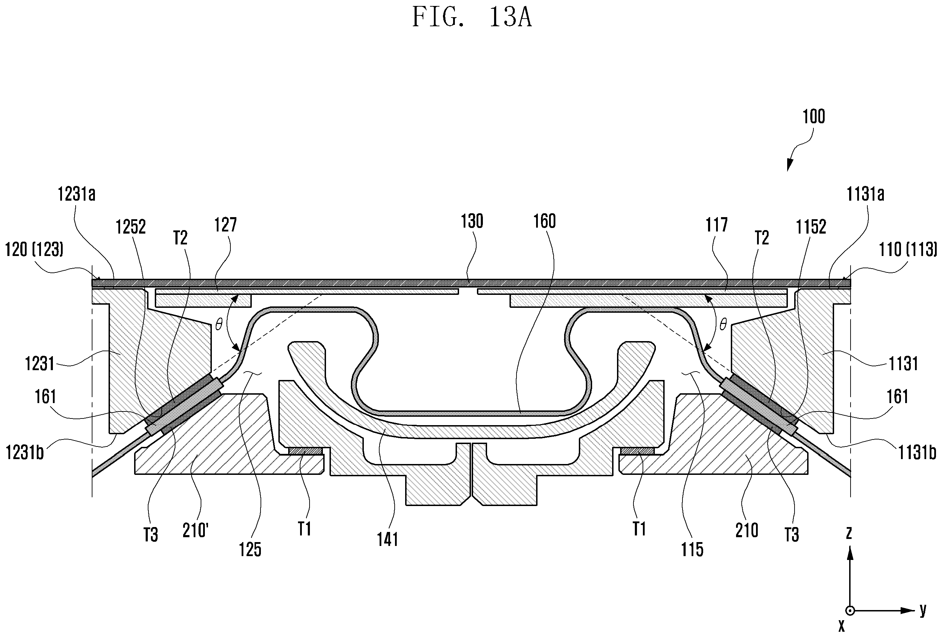

Hereinbelow, a waterproof structure (e.g., the waterproof structure by the waterproof cover 210 and the waterproof members T1, T2, T3, and T4 in FIG. 4B) configured to seal the through-hole (e.g., the through-hole 115 in FIG. 4B; herein, the through-hole 115 may also/alternatively be termed opening 115, aperture 115, gap 115 or the like) provided in the first support member 1131 of the first housing 110 will be described in describing exemplary embodiments of the disclosure, but the waterproof structure configured to seal the through-hole (e.g., the second through-hole 125 in FIG. 13A) provided in the second support member 1231 of the second housing 120 may also have substantially the same configuration.

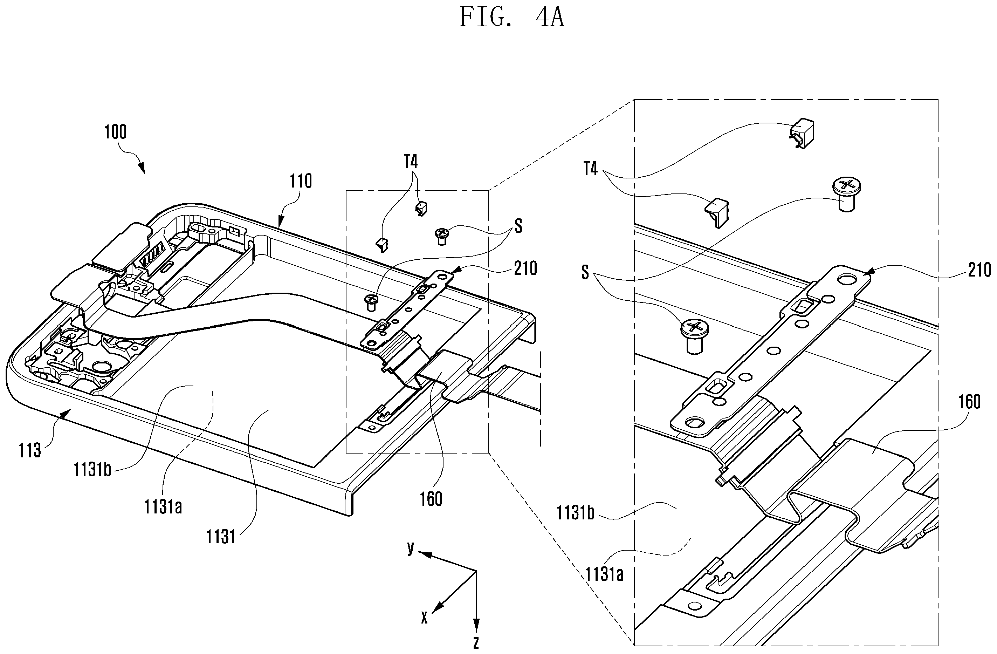

FIGS. 4A and 4B are partial perspective views of an electronic device to which a wiring member according to various embodiments of the disclosure is applied.

Referring to FIGS. 4A and 4B, the electronic device 100 is rotatable with respect to the first housing 110 through a first housing 110 and a hinge device (e.g., hinge device in FIG. 1A). It may include a coupled second housing (e.g., the second housing 120 of FIG. 3). In an embodiment, the electronic device 100 includes a wiring member 160 extending from the first housing 110 to the second housing 120. The wiring member 160 may be disposed through the through-hole 115 extending from the first support surface 1131a to the second support surface 1131b of the first housing 110. In an embodiment, the wiring member 160 includes a bendable flexible printed circuit board (FPCB). In an embodiment, the wiring member 160 is at least partially formed as a stiffener 161, thereby helping improve bondability (e.g. the capability or ability to bond). For example, the stiffener 161 includes a portion in which multiple flexible printed circuit boards (FPCBs) and a thermal pressure tape are integrated. For example, the stiffener 161 includes a portion in which multiple flexible printed circuit boards (FPCBs) and a polymer material (e.g., plastic) are integrated. For example, the stiffener 161 includes a portion in which multiple flexible printed circuit boards (FPCBs) and at least one metal plate are integrated.

According to various embodiments, the electronic device 100 includes a flat surface 1151 provided inside the through-hole 115 and a first inclined surface 1152 extending from the flat surface 1151 and inclined at a predetermined angle. In an embodiment, the flat surface 1151 may be parallel to the second support surface 1131b. The first inclined surface 1152 may be inclined at a predetermined angle with respect to the second support surface 1131b (or may be considered to be inclined at an angle with respect to the flat surface 1151). In an embodiment, the inclination angle (e.g., the inclination angle θ in FIG. 13A) of the first inclined surface 1152 is in a range greater than 0 degrees and smaller than 90 degrees with respect to the first support surface 1131a and/or the second support surface 1131b. In an embodiment, the inclination angle of the first inclined surface 1152 has an inclination angle other than 90 degrees with respect to the surface of the flexible display when the electronic device 100 is in the unfolded state. In an embodiment, the inclination angle of the first inclined surface 1152 is 45 degrees (or substantially so) with respect to the first support surface 1131a and/or the second support surface 1131b. In an embodiment, the first inclined surface 1152 includes a recess. For example, the first inclined surface 1152 includes a recess in which the stiffener 161 of the wiring member 160 can be disposed.

According to various embodiments, the electronic device 100 includes a waterproof cover 210 (e.g., a waterproof bracket) disposed to seal the through-hole 115 in the direction from the second support surface 1131b to the first support surface 1131a (e.g., the z-axis direction). The waterproof cover 210 may be fixed to at least a portion of the second support surface 1131b by fastening members S such as screws. When mounted on the first support member 1131, the waterproof cover 210 may be fixed in conformity with the second support surface 1131b (for example, the waterproof cover 210 is in contact with the second support surface 1131b). In an embodiment, the waterproof cover 210 includes one or more filling holes 2111 connected from the outer surface thereof to the through-hole. The filling holes 2111 may be used as an injection hole for a waterproof filling member as a waterproof member applied to cover an edge of the wiring member 160 after the waterproof cover 210 is mounted in the through-hole 115. The filling holes 2111 may be provided in the waterproof cover 210 at positions where the waterproof filling member can be applied to the left and right edges of the wiring member 160. In some embodiments, the filling holes 2111 are provided at positions in the waterproof cover 210 where a stepped area(or depressed portion) between the first inclined surface 1152 on which the wiring member 160 is disposed and the flat surface 1511 neighboring the first inclined surface 1152 is covered.

According to various embodiments, the through-hole 115 through which the wiring member 160 passes is sealed by the waterproof cover 210 and the waterproof members T1, T2, T3, and T4. The waterproof members T1, T2, T3, and T4 may include any combination (e.g. all) of a first waterproof member T1 disposed between the flat surface 1152 in the through-hole 115 and the waterproof cover 210, a second waterproof member T2 disposed between the first inclined surface 1152 and the stiffener 161 of the wiring member 160, and a third waterproof member T3 disposed between the stiffener 161 of the wiring member 160 and the waterproof cover 210. The waterproof members may include fourth waterproof members T4 which are filled in the filling holes 2111 in the waterproof cover 210, thereby interconnecting the first waterproof member T1 and the second and third waterproof members T2 and T3. In an embodiment, the fourth waterproof members T4 are waterproof filling members and may each include a cure-in-place gasket (CIPG). In an embodiment, the fourth waterproof members T4 each include a liquid-type filling member that is applied to the filling hole and then cured. In an embodiment, the fourth waterproof members T4 are introduced into the filling holes 2111 in the waterproof cover 210 and then cured through heat curing, ultraviolet curing, or natural curing. In an embodiment, the first waterproof member T1, the second waterproof member T2, and/or the third waterproof member T3 include at least one of tape, adhesive, waterproof dispensing, silicone, waterproof rubber, resin, or urethane.

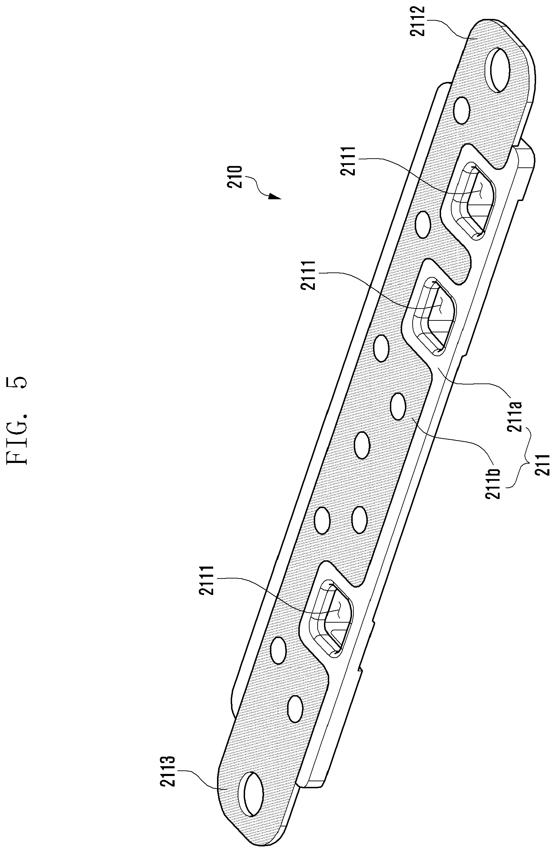

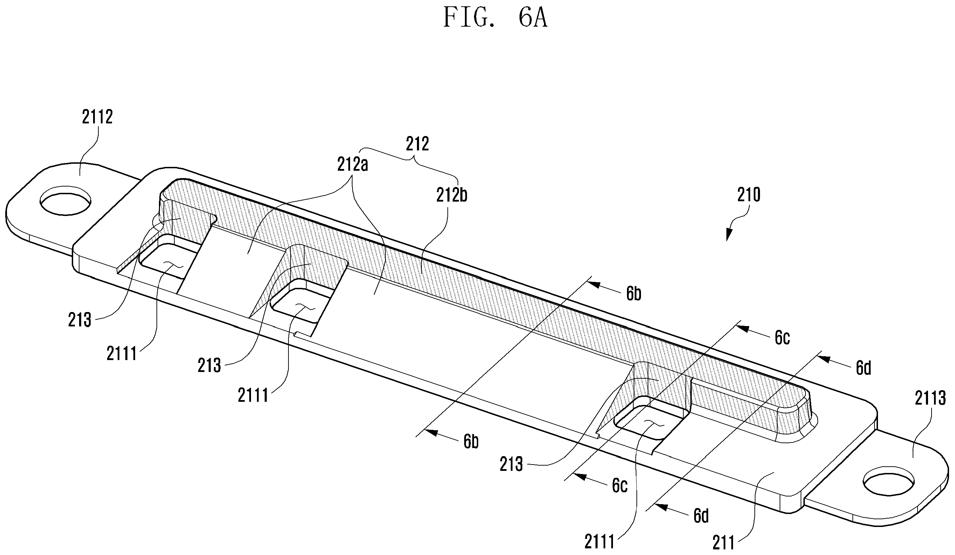

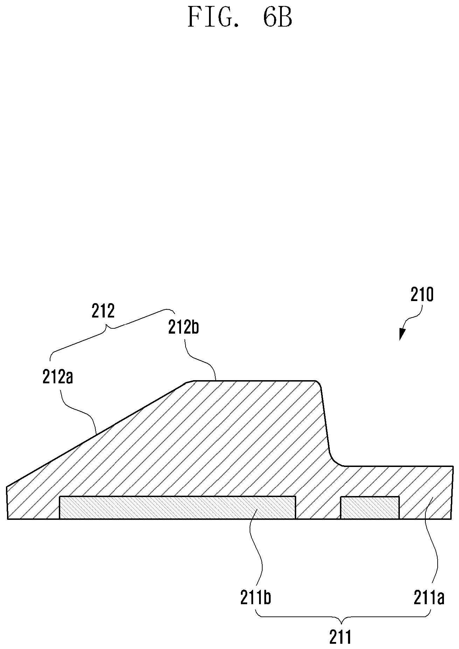

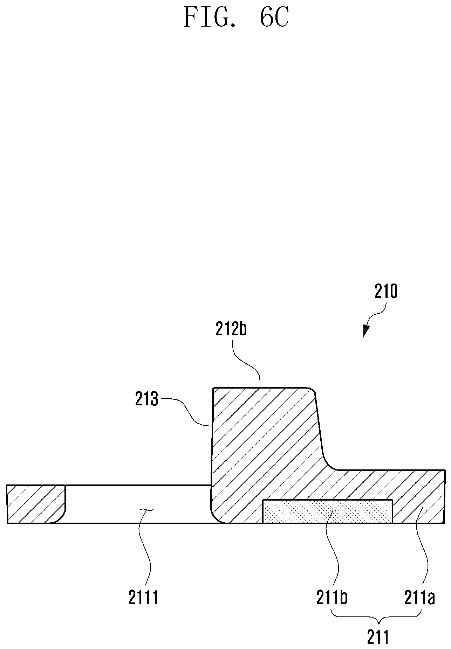

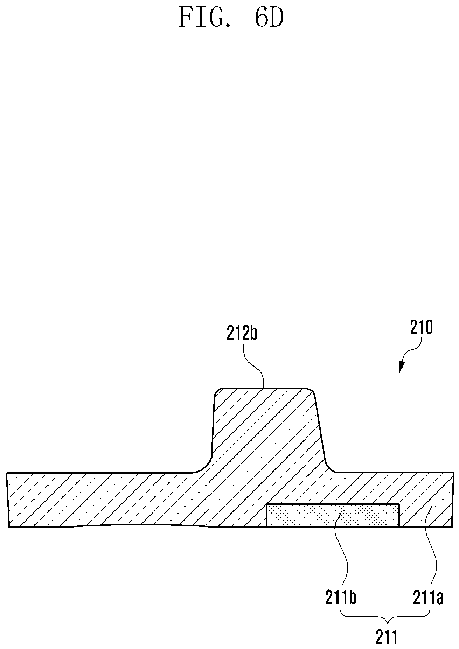

FIG. 5 is a front perspective view of a waterproof cover according to various embodiments of the disclosure. FIG. 6A is a rear perspective view of the waterproof cover according to various embodiments of the disclosure. FIG. 6B is a cross-sectional view of the waterproof cover according to various embodiments of the disclosure taken along line 6b-6b in FIG. 6A. FIG. 6C is a cross-sectional view of the waterproof cover according to various embodiments of the disclosure taken along line 6c-6c in FIG. 6A. FIG. 6D is a cross-sectional view of the waterproof cover according to various embodiments of the disclosure taken along line 6d-6d in FIG. 6A.

Referring to FIGS. 5 to 6D, a waterproof cover 210 may include a plate portion 211 (herein, this may also/alternatively be termed base portion 211 or surface portion 211) and a protrusion 212 (herein, this may also/alternatively be termed ridge 212 or raised portion 212) protruding from the plate portion 211. In an embodiment, the plate portion 211 and the protrusion 212 are accommodated inside a through-hole (e.g., the through-hole 115 in FIG. 4B) when the waterproof cover 210 is mounted on a first support member (e.g., the first support member 1131 in FIG. 4B). Accordingly, the outer surface of the plate portion 211 may be in conformity with a second support surface (e.g., the second support surface 1131b in FIG. 4B) of the first support member 1131. That is, when the plate portion 211 and the protrusion 212 are accommodated inside the through-hole, the outer surface of the plate portion 211 is substantially planar with the second support surface.

According to various embodiments, the waterproof cover 210 is made of different materials. The waterproof cover 210 may be fabricated by coupling a first material 211a to a second material 211b different from4 the first material 211a. In an embodiment, the first material 211a includes metal; and/or the second material 211b includes polymer. In some embodiments, the first material 211a includes polymer and/or the second material 211b includes metal. In an embodiment, the first material 211a and the second material 211b are coupled through injection molding or structural coupling. In an embodiment, the protrusions 212 include a second inclined surface 212a provided at a position corresponding to the first inclined surface (e.g., the first inclined surface 1152 in FIG. 4B) in the through-hole 115 and an extension surface 212b extending from the second inclined surface 212a. In an embodiment, the protrusion 212 includes partition wall structures 213 provided to surround the filling holes 2111 through the second inclined surface 212a and the extension surface 212b (in some cases, the filling holes 2111 are through the second inclined surface 212a, not the extension surface 212b). In an embodiment, the partition wall structures 213 helps reduce overflow or leakage of the fourth waterproof members (the fourth waterproof members T4 in FIG. 4A) when the fourth waterproof members are introduced into the filling holes 2111 after the waterproof cover 210 is mounted in the through-hole 115. In an embodiment, the waterproof cover 210 includes fixing portions 2112 and 2113 extending to opposite ends of the plate portion 211. A fixing area may be provided to be fixed to the first support member 1131 via fastening members (e.g., the fastening members S in FIG. 4A) (e.g., screws) when the waterproof cover 210 is mounted on the first support member 1131.

According to various embodiments, the second inclined surface 212a has a corresponding inclined surface to face the first inclined surface 1152 when the waterproof cover 210 is mounted on the first support member 1131. For example, when the waterproof cover 210 is mounted on the first support member 1131, the second inclined surface 212a and the first inclined surface 1152 are parallel, or substantially so, to one another. In an embodiment, the second inclined surface 212a is used as a bonding surface to which the stiffener 161 of the wiring member 160 can be bonded through a third waterproof member (e.g., the third waterproof member T3 in FIG. 4B). In an embodiment, the extension surface 212b of the protrusion 212 excluding the second inclined surface 212a is accommodated inside the through-hole 115. In an embodiment, the second inclined surface 212a includes a recess. For example, the second inclined surface 212a includes a recess in which the stiffener 161 of the wiring member 160 can be disposed.

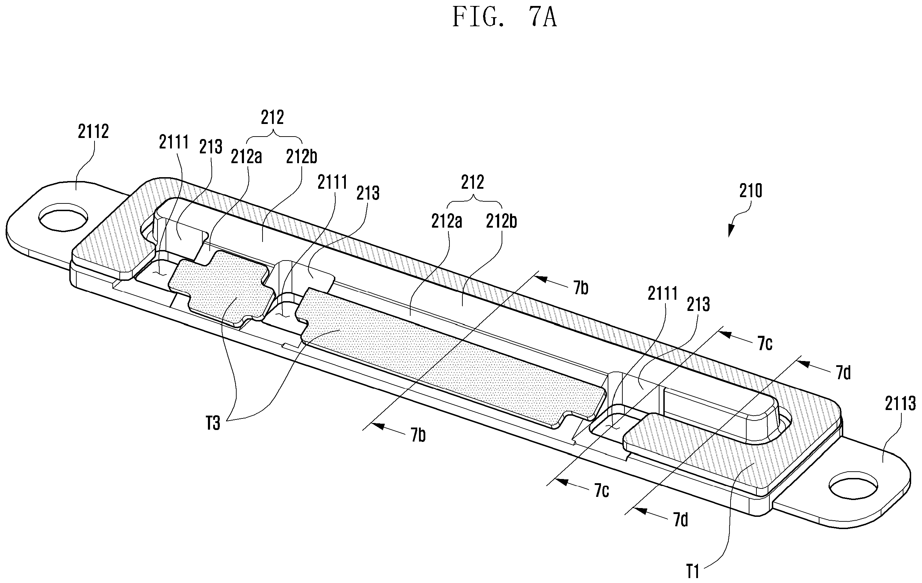

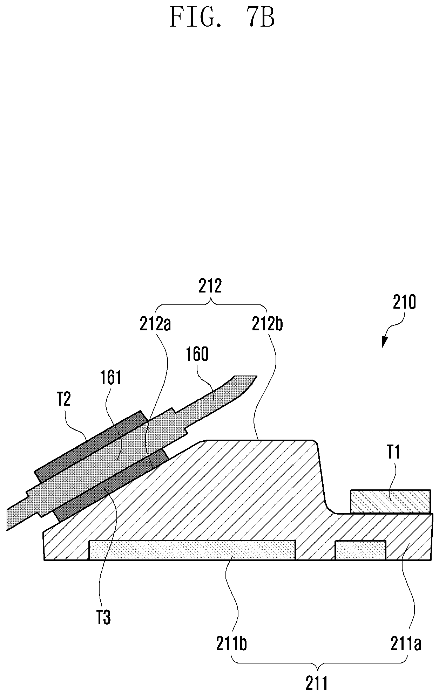

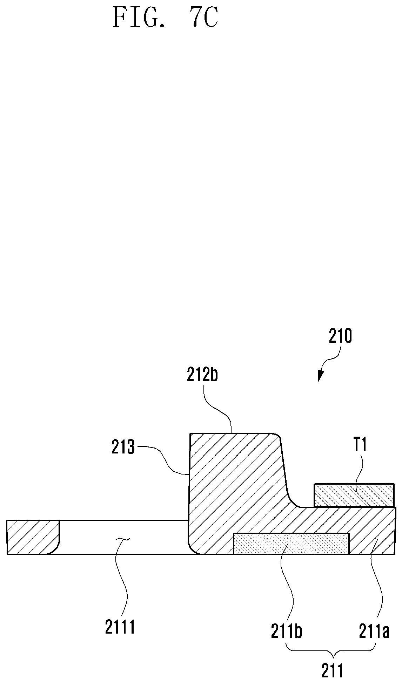

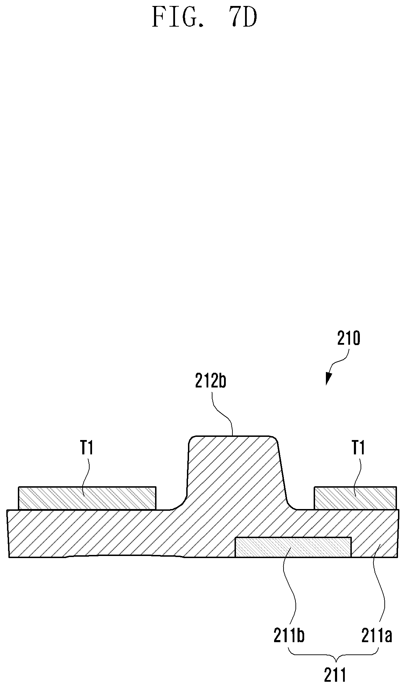

FIG. 7A is a view illustrating a waterproof member according to various embodiments of the disclosure applied to the waterproof cover of FIG. 6A. FIG. 7B is a cross-sectional view of the waterproof cover according to various embodiments of the disclosure taken along line 7b-7b in FIG. 7A. FIG. 7C is a cross-sectional view of the waterproof cover according to various embodiments of the disclosure taken along line 7c-7c in FIG. 7A. FIG. 7D is a cross-sectional view of the waterproof cover according to various embodiments of the disclosure taken along line 7d-7d in FIG. 7A.

In describing the waterproof cover 210 of FIGS. 7A to 7D, the same reference numerals are assigned to components that are substantially the same as those of the waterproof cover 210 of FIGS. 5 to 6D, and a detailed description thereof may be omitted.

Referring to FIGS. 7A to 7D, waterproof members T1, T2, and T3 may be applied to the waterproof cover 210 before the waterproof cover is mounted on a through-hole (e.g., the through-hole 115 in FIG. 4B). In an embodiment, the waterproof members T1, T2, and T3 include a first waterproof member T1 bonded to the plate portion 211 and a third waterproof member T3 bonded to the second inclined surface 212a. In some examples, the first, second and third waterproof members T1, T2, and T3 are considered to be comprised in (e.g. form part of) a single waterproof element; and in other examples any two of the first, second and third waterproof members T1, T2, and T3 are considered to be comprised in (e.g. form part of) a single waterproof element. In an embodiment, since the wiring member 160 is applied to the second inclined surface 212a, the second waterproof member T2 and the third waterproof member T3 are applied together with the stiffener 161 of the wiring member 160 interposed therebetween. For example, the second waterproof member T2 is disposed between the stiffener 161 and the first inclined surface (e.g., the first inclined surface 1152 in FIG. 4B), and the third waterproof member T3 is disposed between the waterproof cover 210 and the stiffener 161. In an embodiment, the first waterproof member T1 and the third waterproof member T3 are first applied to the flat surface 1151 and the first inclined surface 1152 in the through-hole 115.

According to various embodiments, when the first waterproof member T1 is bonded to the plate portion 211 and the third waterproof member T3 is bonded to the second inclined surface 212a, filling holes 2111 are disposed between the two waterproof members T1 and T3. In an embodiment, the filling holes 2111 are used as introduction holes into which the fourth waterproof members T4 are introduced. Therefore, when the first waterproof member T1, the second and third waterproof members T2 and T3, and the fourth waterproof members T4 are applied, a waterproof space in the form of a closed loop surrounding the wiring member 160 may be provided.

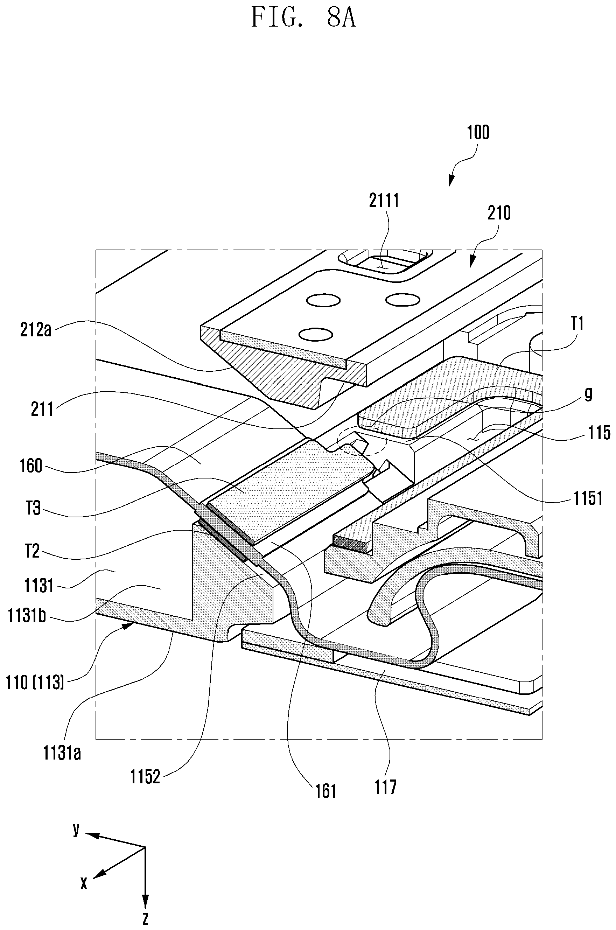

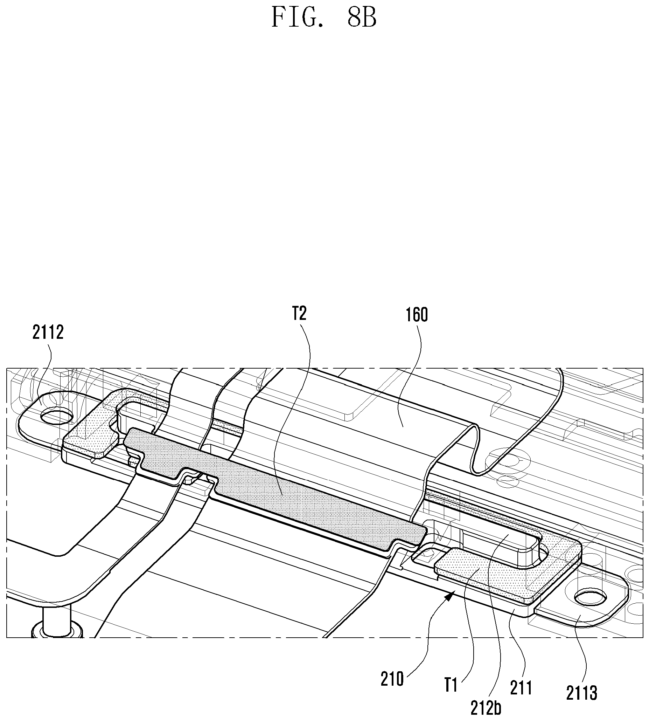

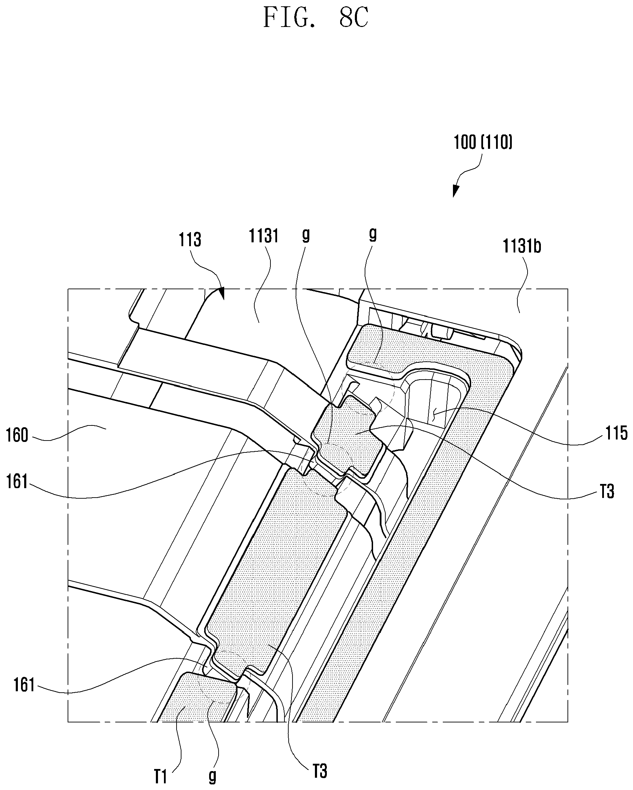

FIGS. 8A to 8C are views illustrating a wiring member bonded to a through-hole according to various embodiments of the disclosure.

Referring to FIGS. 8A to 8C, the wiring member 160 may be disposed through the through-hole 115 in the first support member 1131 of the first housing 110. In this case, the through-hole 115 may be sealed by the waterproof cover 210 and the waterproof members T1, T2, T3, and T4 in the state in which the wiring member 160 passes therethrough. In an embodiment, the first waterproof member T1 is bonded to the flat surface 1151 in the through-hole 115. In an embodiment, the wiring member 160 is bonded to the first inclined surface 1152 in the through-hole 115. In an embodiment, the wiring member 160 is disposed such that the stiffener 161 is bonded to the first inclined surface 1152 via the second waterproof member T2. In an embodiment, one surface of the second waterproof member T2 includes an adhesive material. The wiring member 160 may be disposed by being bonded to the first inclined surface 1152 via the adhesive material included on one surface of the second waterproof member T2. The second waterproof member T2 may be disposed by being bonded via the fourth waterproof members T4 filled in the filling holes 2111. In this case, the width of the first inclined surface 1152 may be substantially the same as the width of the wiring member 160 and/or the stiffener 161. In some embodiments, the width of the first inclined surface 1152 is greater than the width of the wiring member 160 and/or the stiffener 161. In an embodiment, in the state in which the first waterproof member T1 is disposed on the flat surface 1151 in the through-hole 115 and the stiffener 161 of the wiring member 160 is fixed to the first inclined surface 1152 via the second waterproof member T2, the waterproof cover 210 is mounted to seal the through-hole 115. In this case, the waterproof cover 210 may be fixed by being bonded by making the second inclined surface 212a of the waterproof cover 210 face the third waterproof member T3 bonded to the stiffener 161 of the wiring member 160, and making the plate portion 211 of the waterproof cover 210 face the first waterproof member T1. For example, by disposing the second waterproof member T2 to be bonded between the first inclined surface 1152 and the stiffener 161 and disposing the third waterproof member T3 to be bonded between the stiffener 161 and the second inclined surface 212a of the waterproof cover 210, the wiring member 160 is fixed between the through-hole 115 and the waterproof cover 210 (or, to put another way, the wiring member 160 is fixed between the first inclined surface 1152 and the waterproof cover 210) by the second waterproof member T2 and the third waterproof member T3. In an embodiment, the waterproof cover 210 bonded to the through-hole 115 via the waterproof members T1, T2, and T3 is completely fixed by fastening fixing portions (e.g., the fixing portions 2112 and 2113 in FIG. 5) to the first support member 1131 by fastening members (e.g., the fastening members S in FIG. 4A). The gaps g between the first waterproof member T1 and the second and third waterproof members T2 and T3 may be filled with the fourth waterproof members T4 filled in the filling holes 2111 in the fastened waterproof cover 210.

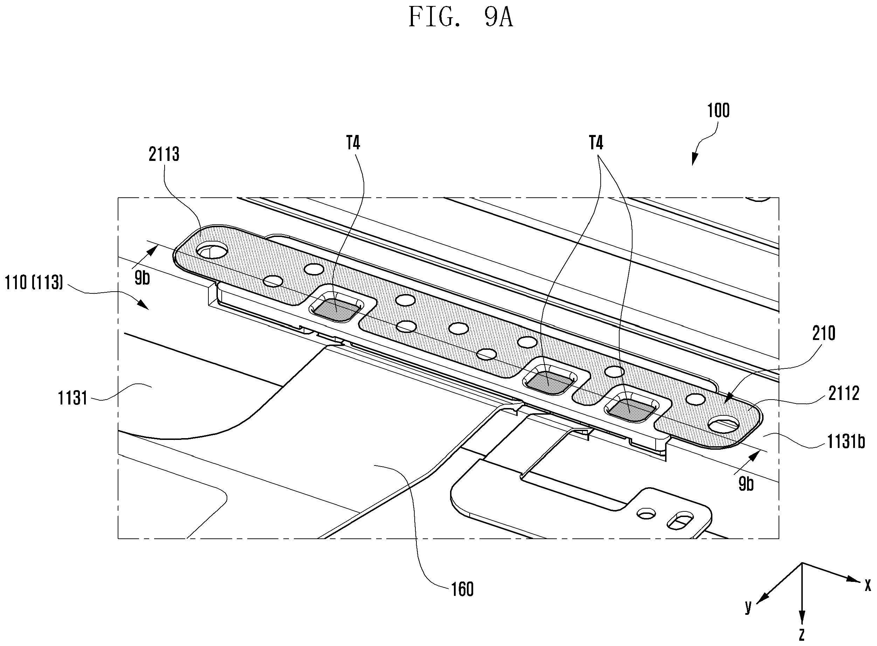

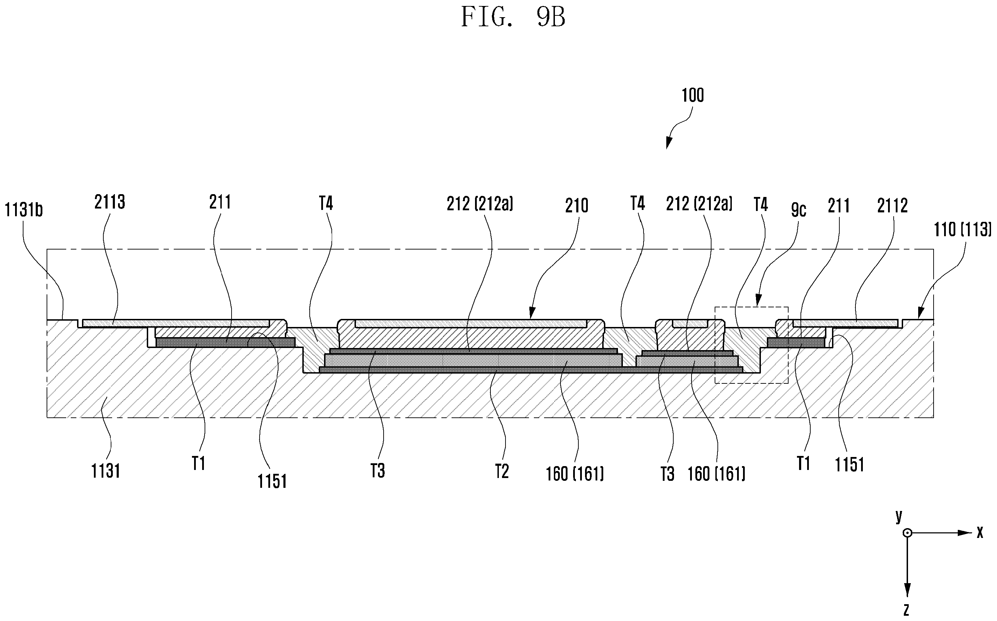

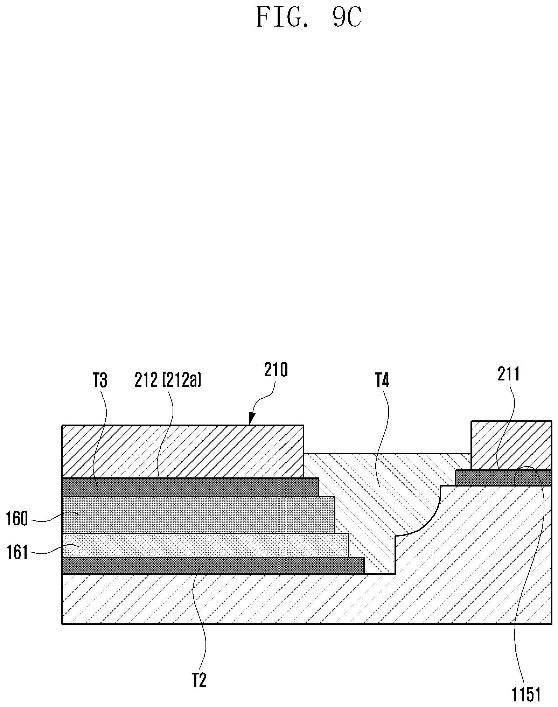

FIG. 9A is a partial perspective view of an electronic device illustrating a state in which a through-hole is sealed by the waterproof cover according to various embodiments of the disclosure. FIG. 9B is a partial cross-sectional view of the electronic device according to various embodiments of the disclosure taken along line 9b-9b. FIG. 9C is an enlarged view of area 9c of FIG. 9B according to various embodiments of the disclosure.

Referring to FIGS. 9A to 9C, discontinuous sections are formed between the flat surface 1151 and the first inclined surface 1152 in the through-hole 115 provided in the first support member 1131, and may be formed to be stepped. Accordingly, disconnected gaps (e.g., the gap g in FIG. 8A) may also be formed between the first waterproof member T1 and the second and third waterproof members T2 and T3. In an embodiment, these gaps g are filled- in (for example, the gaps g are closed, or spanned, or sealed etc.) by the fourth waterproof members T4 which are introduced through the filling holes 2111 in the waterproof cover 210 after the waterproof cover 210 is mounted on the first support member 1131. In this case, the fourth waterproof member T4 filled through the gap g connects the first waterproof member T1 and the second and third waterproof members T2 and T3.

According to various embodiments, when the fourth waterproof members T4 are filled through the filling holes 2111 in the waterproof cover 210, the gaps g between the first waterproof member T1 and the second and third waterproof members T2 and T3 may be filled. In this case, the fourth waterproof members T4 may be disposed to cover all of the left and right edge areas of the wiring member 160, the left and right boundary areas of the first inclined surface 1152 and the second inclined surface 212a, the left and right edge areas of the second and third waterproof members T2 and T3, and the edge areas of the first waterproof member T1. In an embodiment, the second waterproof member T2, the wiring member 160 including the stiffener 161, and the third waterproof member T3 are disposed to have a stepped structure such that each edge is visible when the filling holes 2111 are viewed from above. For example, this step structure may help improve waterproofing performance by inducing uniform application of the fourth waterproof members T4 to the boundary area of each structure.

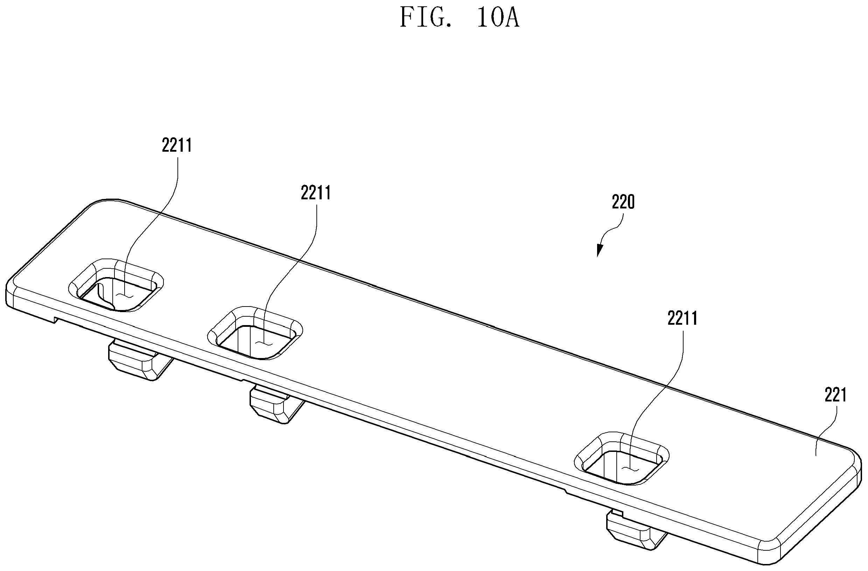

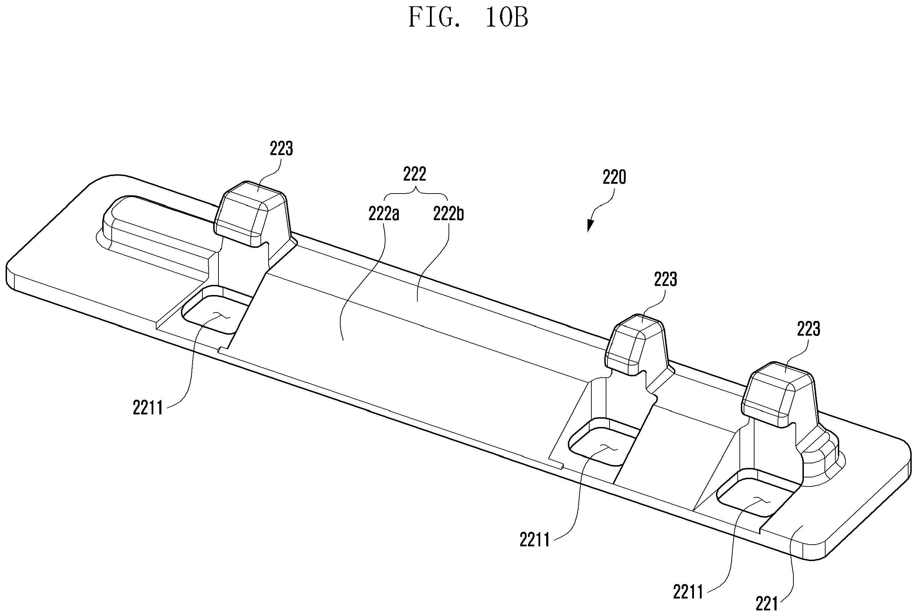

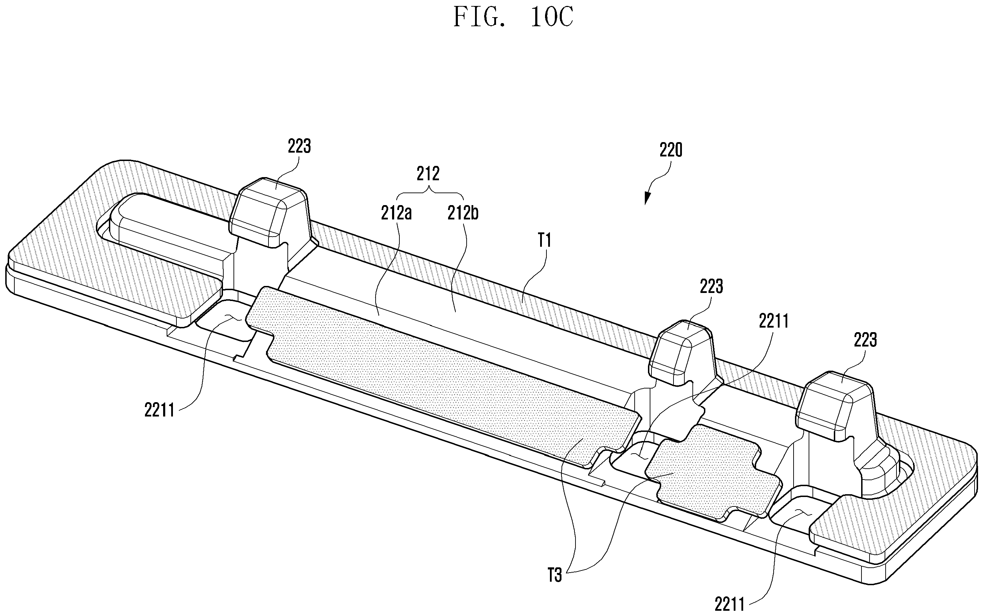

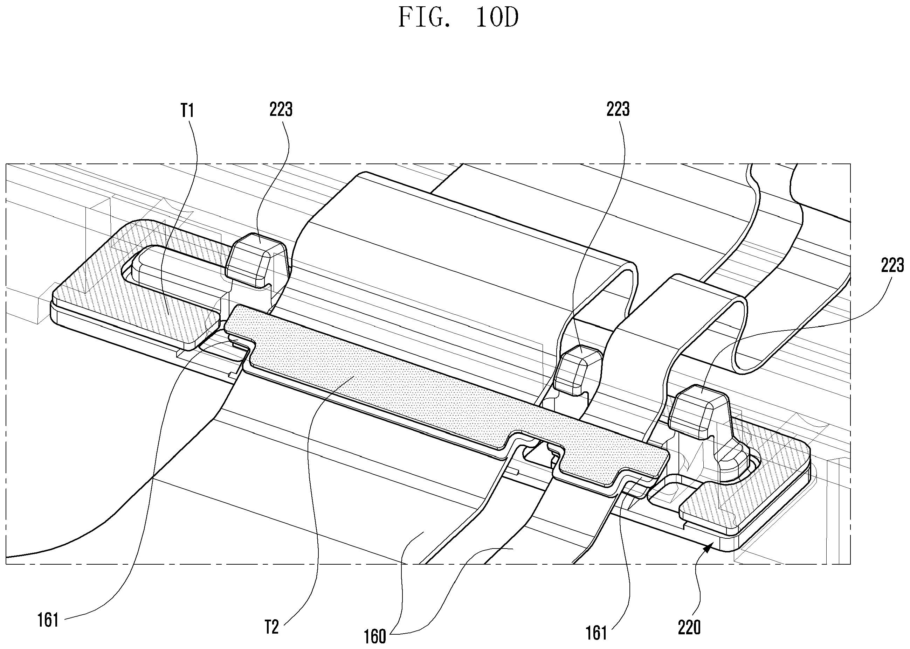

FIG. 10A is a front perspective view of a waterproof cover according to various embodiments of the disclosure. FIG. 10B is a rear perspective view of the waterproof cover according to various embodiments of the disclosure. FIG. 10C is a view illustrating a waterproof member according to various embodiments of the disclosure applied to the waterproof cover of FIG. 10B. FIG. 10D is a partial perspective view of an electronic device to which the waterproof cover according to various embodiments of the disclosure is applied.

A waterproof cover (e.g., the waterproof cover 210 in FIG. 5) according to various embodiments is fixed by fastening the fixing portions (e.g., the fixing portions 2112 and 2113 of FIG. 5), which extend to opposite left and right ends, by fastening members to the first support member 1131. In this case, it is necessary to determine the space for disposing the waterproof cover 210, including the extension structure of the fixing portions 2112 and 2113, which may make cause a difficulty in layout design of peripheral structures (e.g., a hinge device).

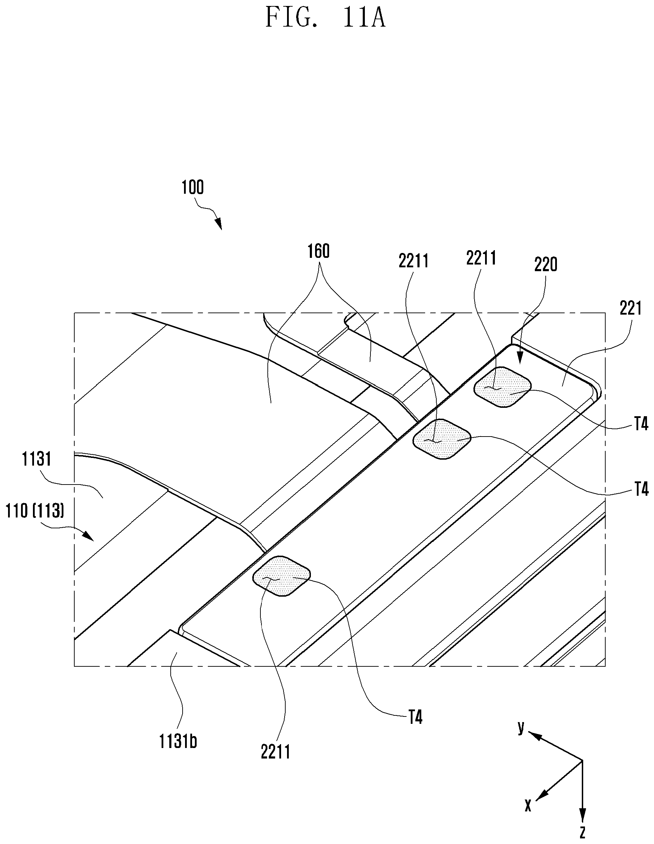

Referring to FIGS. 10A to 10D, the waterproof cover 220 may include a plate portion 221 and a protrusion 212 protruding from the plate portion 221. In an embodiment, the protrusion 212 may include a second inclined surface 212a provided at a position corresponding to (e.g. facing, or aligned in parallel with) the first inclined surface (e.g., the first inclined surface 1152 in FIG. 4B) in the through-hole (e.g., the through-hole 115 in FIG. 4B), and an extension surface 212b extending from the second inclined surface 212a. In an embodiment, the waterproof cover 220 may include one or more hook structures 223 (herein, these may also/alternatively be termed couplers 223, or connectors 223) protruding from the extension surface 212b. In some embodiments, the hook structures 223 protrude from the plate portion 221. According to an embodiment, the hook structures 223 are formed to avoid the filling holes 2211. The hook structures 223 may be provided around the filling holes 2211 so that the hook structures can be used as portions of the partition wall structures to reduce the overflow of the fourth waterproof members (e.g., the fourth waterproof members T4 in FIG. 11A) filled in the filling holes 2211.

According to various embodiments, the first waterproof member T1 is disposed by being bonded to the plate portion 221. In an embodiment, the wiring member 160 is disposed by being bonded to the second inclined surface 212a via the third waterproof member T3 and is bonded to the first inclined surface 1152 in the through-hole 115 via the second waterproof member T2.

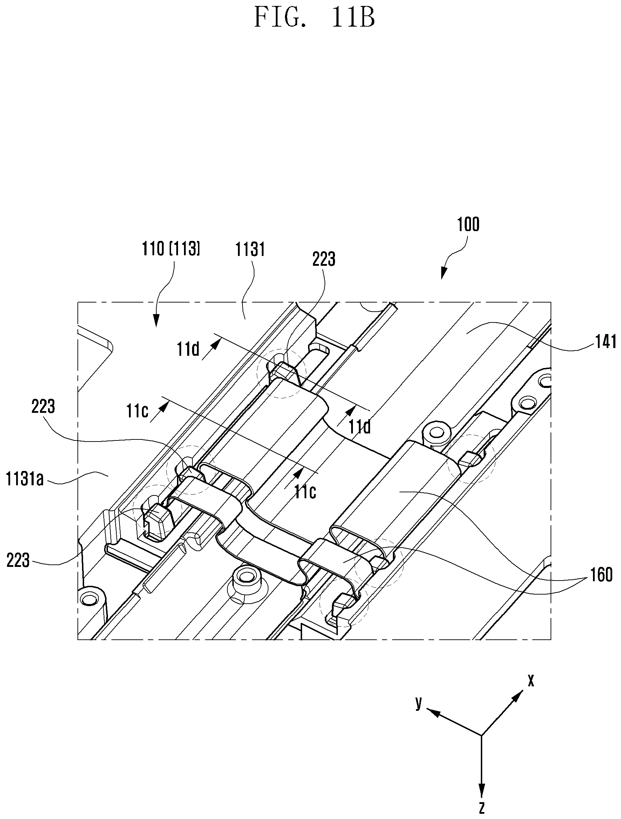

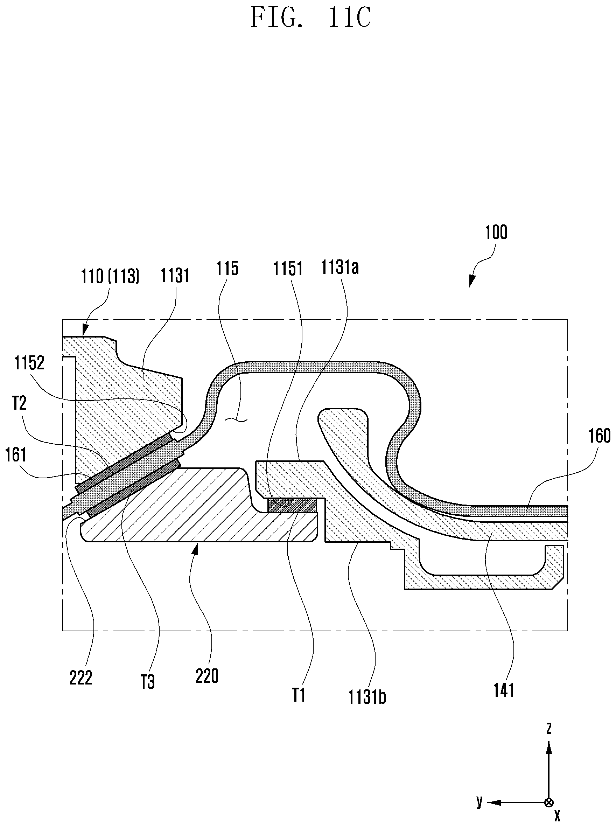

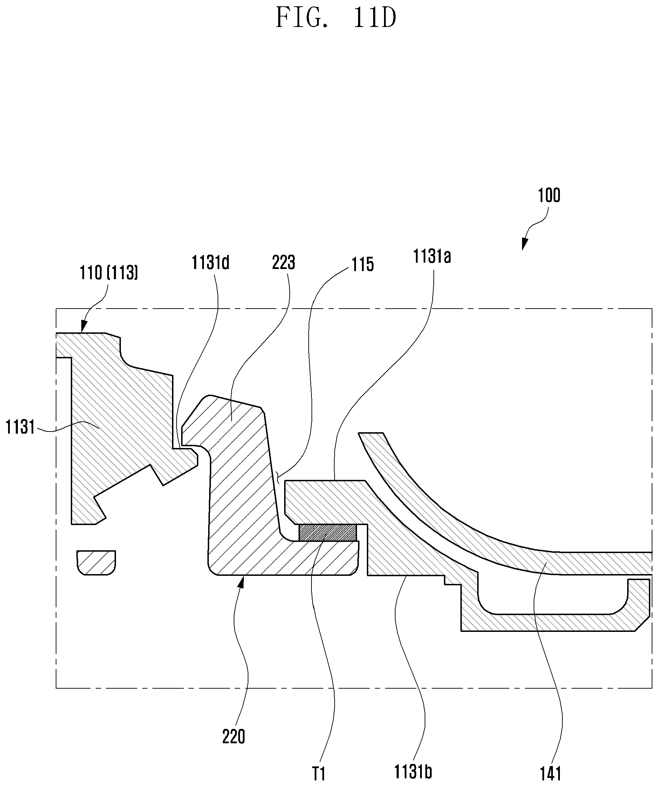

FIG. 11A is a partial perspective view of an electronic device illustrating the state in which the through-hole is sealed by the waterproof cover according to various embodiments of the disclosure. FIG. 11B is a view of the electronic device in which the waterproof cover is applied to the through-hole according to various embodiments of the disclosure, viewed from the front side. FIG. 11C is a partial cross-sectional view of the electronic device according to various embodiments of the disclosure taken along line 11c-11c in FIG. 11B. FIG. 11D is a partial cross-sectional view of the electronic device according to various embodiments of the disclosure taken along line 11d-11d in FIG. 11B.

Referring to FIGS. 11A to 11D, when the waterproof cover 220 is mounted in the through-hole 115, the waterproof cover 220 may be fixed by being bonded by making the second inclined surface 212a of the waterproof cover 220 face the third waterproof member T3 bonded to the stiffener 161 of the wiring member 160, and making the plate portion 221 of the waterproof cover 210 face the first waterproof member T1. For example, by disposing the second waterproof member T2 to be bonded between the first inclinded surface 1152 and the stiffener 161 and disposing the third waterproof member T3 to be bonded between the stiffener 161 and the second inclined surface 222 of the waterproof cover 220, the wiring member 160 is fixed between the through-hole 115 and the waterproof cover 220 by the second waterproof member T2 and the third waterproof member T3. The gaps (e.g., the gap g in FIG. 8A) generated between the first waterproof member T1 and the second and third waterproof members T2 and T3 in the state in which the waterproof cover 220 is mounted in the through-hole 115 can be filled with the fourth waterproof members T4 filled through the filling holes 2211 in the waterproof cover 220.

According to various embodiments, the waterproof cover 220 bonded to the through-hole 115 by the waterproof members T1, T2, and T3 is completely fixed when the hook structures 223 are engaged with the engagement portions 1131d (e.g., engagement steps) provided in the first support member 1131 at or near the periphery of the through-hole 115. For example, separate fixing portions (e.g., the fixing portions 2112 and 2113 in FIG. 5) are excluded by (e.g. not necessary in view of) the engagement structures of the hook structures 223 and the engagement portions 1131d, which may help ensure the degree of freedom in layout design.

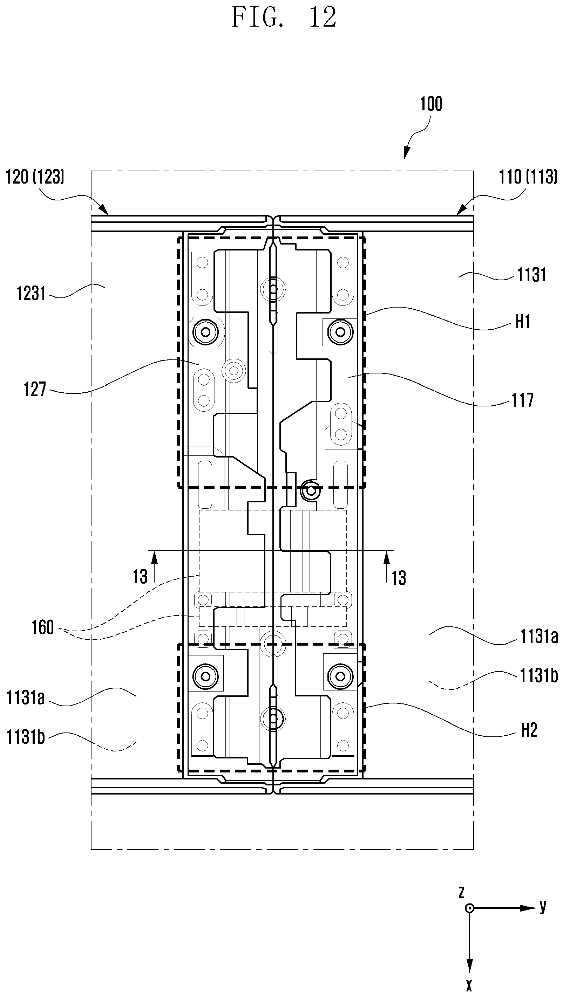

FIG. 12 is a view illustrating the configuration in an area 12 of the electronic device of FIG. 1A according to various embodiments of the disclosure.

Referring to FIG. 12, the electronic device 100 may include a first housing 110 and a second housing 120 that is foldably coupled to the first housing 110 via at least one hinge device (e.g., the hinge device in FIG. 1A). In an embodiment, the at least one hinge device is disposed in a first area on one side and in a second area on the other side in an area corresponding to a bending area (e.g., the third area 130c in FIG. 1B) of a flexible display (e.g., the flexible display 130 in FIG. 1). In an embodiment, the wiring member 160 extends from the first housing 110 to the second housing 120 by passing the space between the first area H1 and the second area H2. The wiring member 160 may extend by penetrating the first support member 1131 of the first housing 110, then passing through the inner space of the hinge housing (e.g., the hinge housing 141 in FIG. 13A), and penetrating the second support member 1231 of the second housing 120. In this case, the electronic device 100 may include a first support plate 117 (e.g., a first hinge plate or a first wing plate) disposed in the first housing 110 and covering at least a portion of the hinge housing 141, and a second support plate 127 (e.g., a second hinge plate or a second wing plate) disposed in the second housing 120 and covering at least a portion of the hinge housing 141. In an embodiment, the wiring member 160 is disposed below the hinge housing 141 and the first and second support plates 117 and 127. In an embodiment, the first and second support plates 117 and 127 arenot involved in the construction of the waterproof structure. The individual configurations of this waterproof structure ensure the free operability of the first and second support plates 117 and 127, which operate flexibly depending on the bending shape of the flexible display, which is transformed in response to the folding and unfolding operation of the electronic device 100.

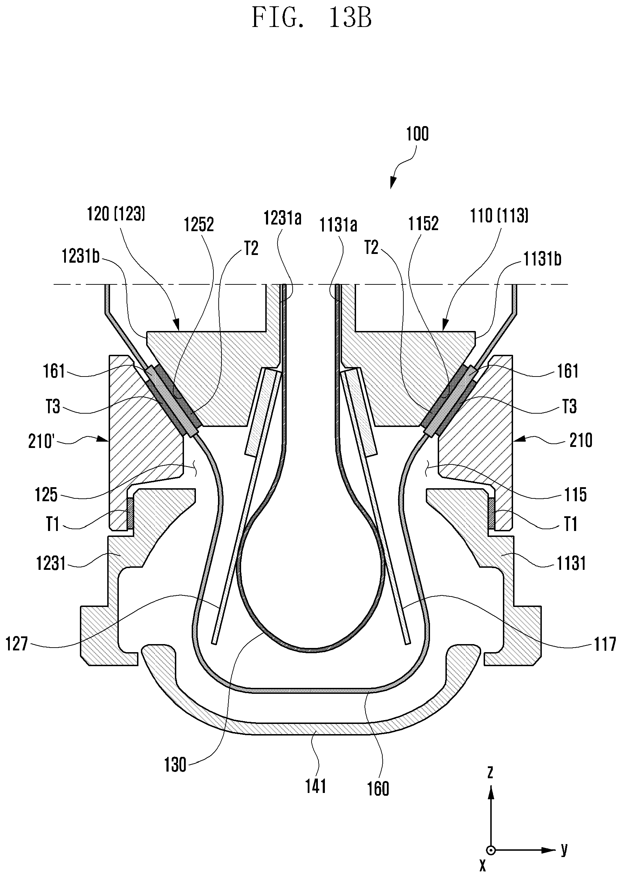

FIG. 13A is a partial cross-sectional view of an electronic device according to various embodiments of the disclosure in the unfolded state. FIG. 13B is a partial cross-sectional view of the electronic device according to various embodiments of the disclosure in the folded state.

Referring to FIGS. 13A and 13B, the electronic device may include a first housing 110 and a second housing 120 that is foldably coupled to the first housing 110 via at least one hinge device (e.g., the hinge device of FIG. 1A). In an embodiment, the first housing 110 includes a first side surface member 113 and a first support member 1131 extending from the first side surface member 113 into the inner space of the first housing. In an embodiment, the second housing 120 includes a second side surface member 123 and a second support member 1231 extending from the second side surface member 123 into the inner space of the second housing 120. In an embodiment, the electronic device 100 includes a wiring member 160 extending to penetrate the first through-hole 115 provided from the first support surface 1131a to the second support surface 1131b of the first support member 1131, pass through the hinge housing 141, and penetrate the second through-hole 125 provided from the third support surface 1231a to the fourth support surface 1231b of the second support member 1231. In an embodiment, the electronic device 100 includes a first support plate 117 coupled to at least a portion of the first housing 110 and a second support plate 127 coupled to at least a portion of the second housing 120. In an embodiment, when the electronic device 100 is in the unfolded state, the first support surface 1131a and the third support surface 1231a of the first support plate 117 and the second support plate 127 are flush with each other (e.g. are planar with each other, or together form a flat surface) to support the flexible display 130. In an embodiment, when the electronic device 100 is in the folded state, the positions of the first support plate 117 and the second support plate 127 are changed to support at least a portion of the bending area of the flexible display 130. In an embodiment, the first and second support plates 117 and 127 arenot involved in the construction of the waterproof structure. Accordingly, the first and second support plates 117 and 127 may be guaranteed to have free operability to flexibly operate depending on the bending shape of the flexible display 130, which is transformed in response to the folding and unfolding operation of the electronic device 100.

According to various embodiments, the wiring member 160 is fixed to the inclined surface 1152 provided in the first through-hole 115 of the first housing 110 by being bonded via the second waterproof member T2. The first through-hole 115 may be sealed by the waterproof cover 210 in the state in which the wiring member 160 passes therethrough. In this case, the waterproof cover 210 may be bonded to the first support member 1131 via the first waterproof member T1 and bonded to the wiring member 160 via the third waterproof member T3. Although not illustrated, the waterproof cover 210 includes filling holes (e.g., the filling holes 2111 in FIG. 5), and the first through-hole 115 may be sealed for waterproofing from the outside by filling the disconnected gaps between the first waterproof member T1 and the second and third waterproof members T2 and T3 by fourth waterproof members (e.g., the fourth waterproof members T4 in FIG. 9A) filled in the filling holes 2111. In an embodiment, the inclination angle θ of the inclined surface 1152 provided in the first through-hole 115 is in the range of 0 degrees < θ < 90 degrees with respect to the first support surface 1131a. In an embodiment, the inclination angle θ of the inclined surface 1152 is 45 degrees.

According to various embodiments, the wiring member 160 is fixed to the inclined surface 1252 provided in the second through-hole 125 of the second housing 120 by being bonded via the second waterproof member T2. In an embodiment, the second through-hole 125 is sealed by the waterproof cover 210' in the state in which the wiring member 160 passes therethrough. In this case, the waterproof cover 210' may be bonded to the second support member 1231 via the first waterproof member T1 and bonded to the wiring member 160 via the third waterproof member T3. Although not illustrated, the waterproof cover 210' includes filling holes (e.g., the filling holes 2111 in FIG. 5), and the second through-hole 125 may be sealed for waterproofing from the outside by filling the disconnected gaps between the first waterproof member T1 and the second and third waterproof members T2 and T3 by fourth waterproof members (e.g., the fourth waterproof members T4 in FIG. 9A) filled in the filling holes 2111. In an embodiment, the inclination angle θ of the inclined surface 1252 provided in the second through-hole 125 is in the range of 0 degrees < θ < 90 degrees with respect to the third support surface 1231a. In an embodiment, the inclination angle θ of the inclined surface 1252 is 45 degrees.

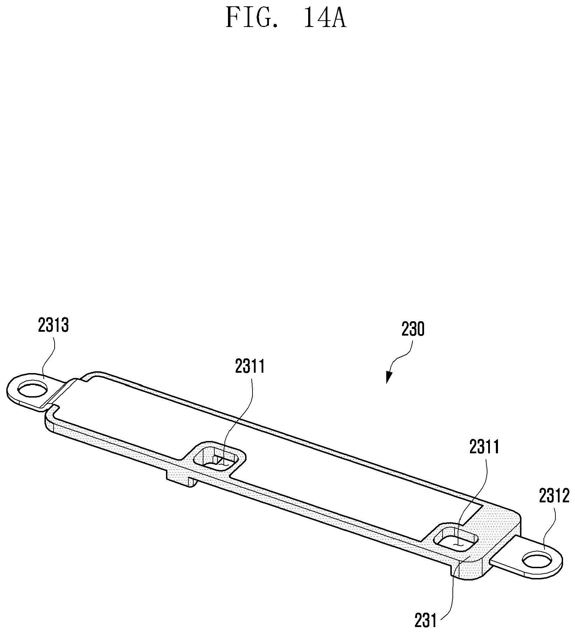

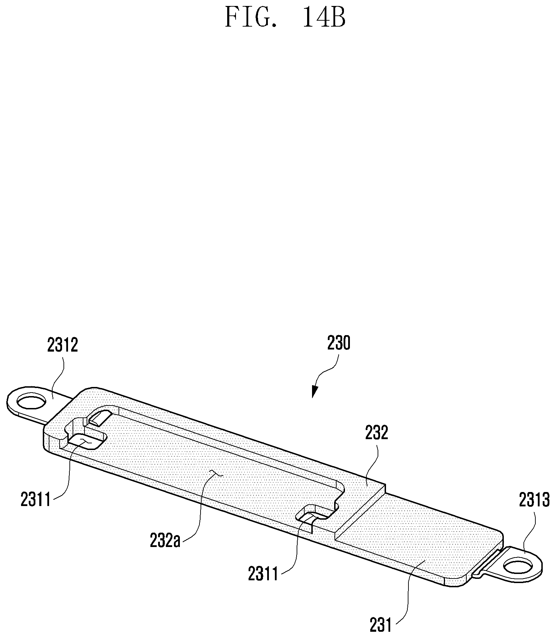

FIG. 14A is a front perspective view of a waterproof cover according to various embodiments of the disclosure. FIG. 14B is a rear perspective view of the waterproof cover according to various embodiments of the disclosure.

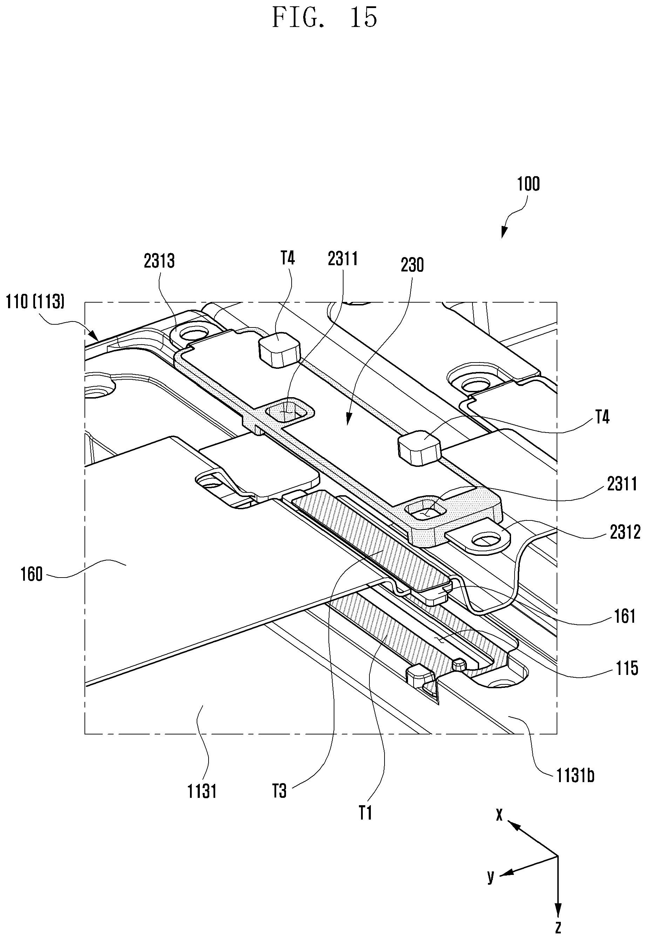

Referring to FIGS. 14A and 14B, the waterproof cover 230 may include a plate portion 231 and a protrusion 232 that protrudes from the plate portion 231 and includes a partially open space 232a. In an embodiment, the waterproof cover 230 includes filling holes 2311 in the plate portion 231 for fourth waterproof members (e.g., the fourth waterproof members T4 in FIG. 15). In an embodiment, the waterproof cover includes fixing portions 2312 and 2313 that extend to opposite ends of the plate portion 231 and are fixed to the first support member 1131 of the electronic device 100 by fastening members.

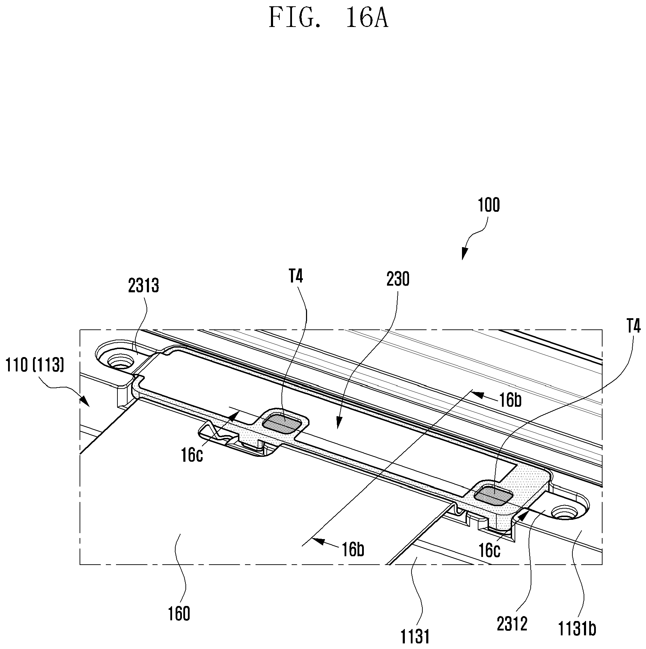

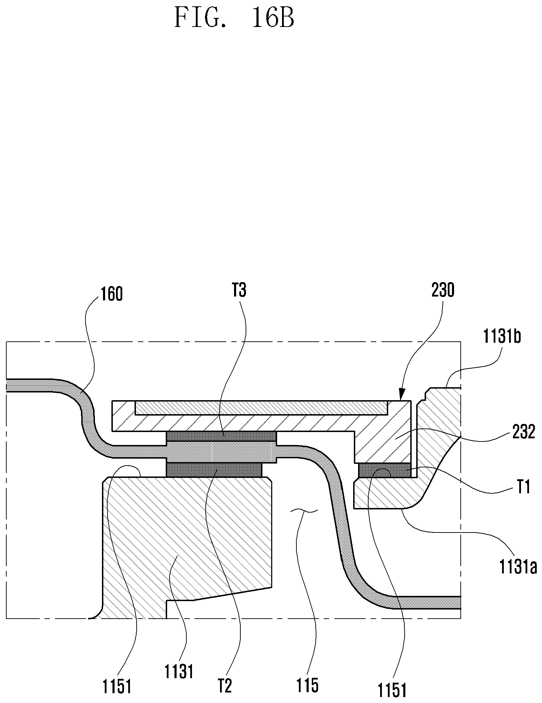

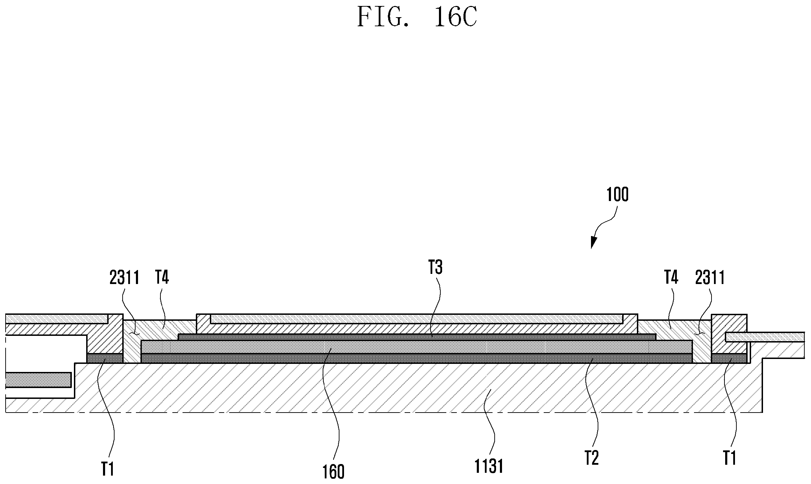

FIG. 15 is an exploded perspective view of an electronic device illustrating a state in which the waterproof cover of FIG. 14A according to various embodiments of the disclosure is applied to the through-hole. FIG. 16A is a partial perspective view of an electronic device illustrating a state in which the through-hole is sealed by the waterproof cover of FIG. 14A according to various embodiments of the disclosure. FIG. 16B is a partial cross-sectional view of the electronic device according to various embodiments of the disclosure taken along line 16b-16b in FIG. 16A. FIG. 16C is a partial cross-sectional view of the electronic device according to various embodiments of the disclosure taken along line 16c-16c in FIG. 16A.

Referring to FIGS. 15 to 16C, since the cover member 230 (or waterproof cover 230) does not include the second inclined surface (e.g., the second inclined surface 212a in FIG. 6A), the through-hole 115 may include only the flat surface 1151 without the first inclined surface (e.g., the first inclined surface 1152 in FIG. 4B). In an embodiment, the wiring member 160 is disposed to penetrate the through-hole 115 in the first support member 1131 of the first housing 110. In this case, the through-hole 115 may be sealed by the waterproof cover 230 and the waterproof members T1, T2, T3, and T4 in the state in which the wiring member 160 passes therethrough. In an embodiment, the first waterproof member T1 is disposed (or provided) by being bonded between the protrusion 232 and the first support member 1131. In an embodiment, the second waterproof member T2 is disposed (or provided) by being bonded between the first support member 1131 and the stiffener 161 of the wiring member 160 in the space 232a surrounded by the protrusion 232. In an embodiment, the third waterproof member T3 is disposed (or provided) by being bonded between the waterproof cover 230 and the stiffener 161 of the wiring member 160 in the space 232a surrounded by the protrusion 232.

According to various embodiments, the waterproof cover 230 bonded to the through-hole 115 by the waterproof members T1, T2, and T3 is completely fixed by fastening the fixing portions 2312 and 2313 extending at opposite ends to the first support member 1131 by fastening members. In an embodiment, disconnected sections generated between the first waterproof member T1 and the second and third waterproof members T2 and T3,due to the height difference between the protrusion and the plate portion, are filled with the fourth waterproof members T4 filled in the filling holes 2311 in the fastened waterproof cover 230.

According to various embodiments, when the fourth waterproof members T4 are filled through the filling holes 2311 in the waterproof cover 230, the disconnected sections between the first waterproof member T1 and the second and third waterproof members T2 and T3 are filled without interruption. In this case, the fourth waterproof members T4 may be disposed to cover all of the left and right edge areas of the wiring member 160, the boundary area of the protrusion 232 and the plate portion 212, the left and right edge areas of the second and third waterproof members T2 and T3, and the edge areas of the first waterproof member T1. The second waterproof member T2, the wiring member 160, and the third waterproof member T3 may be disposed to have a stepped structure such that each edge is visible when the filling holes 2311 are viewed from above. This step structure may help improve waterproofing performance by inducing uniform application of the fourth waterproof members T4 to the boundary area of each structure.

According to various embodiments, an electronic device includes a first housing (e.g., the first housing 110 in FIG. 3) including a first support member (e.g., the first support member 1131 in FIG. 3), a second housing (e.g., the second housing 120 in FIG. 3) including a second support member (e.g., the second support member 1231 in FIG. 3), a hinge device (e.g., the hinge device in FIG. 1A) interconnecting the first housing and the second housing to be rotatable relative each other, a wiring member (e.g., the wiring member 160 in FIG. 4B) penetrating through-holes (e.g., the first through-hole 115 and the second through-hole 125 in FIGS. 13A) provided in the first support member and the second support member, respectively, and disposed to electrically interconnect the first housing and the second housing, a waterproof cover (e.g., the waterproof cover 210 in FIG. 4B) arranged to seal the through-holes, and including a filling hole (e.g., the filling hole 2111 in FIG. 4B), a waterproof member (e.g., the waterproof members T1, T2, and T3 in FIG. FIG. 4B) disposed between the waterproof cover and the through-holes, and a waterproof filling member (e.g., the fourth waterproof member T4 in FIG. 4B) filled through the filling hole. The through-holes at least partially include a first inclined surface (e.g., the first inclined surface 1152 in FIG. 4B), the wiring member is disposed by being bonded to the first inclined surface via the waterproof member and the waterproof cover, and the waterproof filling member is disposed to cover an edge of the wiring member.

According to various embodiments, the electronic device further includes a flexible display (e.g., the flexible display 130 in FIG. 1A) disposed to be supported by the first housing and the second housing.

According to various embodiments, the first inclined surface has an inclination angle other than 90 degrees with respect to the surface of the flexible display when the electronic device is in an unfolded state.

According to various embodiments, the inclination angle of the first inclined surface is in a range larger than 0 degrees and smaller than 90 degrees when the electronic device is in the unfolded state.

According to various embodiments, the through-holes include a flat surface 1151 extending from the first inclined surface.

According to various embodiments, the waterproof cover includes a plate portion (e.g., the plate portion 211 in FIG. 6A) and a protrusion (e.g., the protrusion 212 in FIG. 6A) protruding from the plate portion, and the protrusion includes a second inclined surface (e.g., the second inclined surface 212a in FIG. 6A) provided at a position corresponding to the first inclined surface.

According to various embodiments, the wiring member are disposed between the first inclined surface and the second inclined surface.

According to various embodiments, the waterproof member includes a first waterproof member (e.g., the first waterproof member T1 in FIG. 4B) disposed between the plate portion and the flat surface, a second waterproof member (e.g., the second waterproof member T2 in FIG. 4B) disposed between the wiring member and the first inclined surface, and a third waterproof member (e.g., the third waterproof member T3 in FIG. 4B) disposed between the wiring member and the second inclined surface.

According to various embodiments, the waterproof filling member is disposed to interconnect the first and second waterproof members and the third waterproof member.

According to various embodiments, the second waterproof member, the wiring member, and the third waterproof member are arranged to have a stepped structure such that the respective edges thereof are visible when the filling hole is viewed from above.

According to various embodiments, the waterproof cover includes at least one hook structure (e.g., the hook structure 223 in FIG. 11D) protruding toward the through-holes, and when the waterproof cover is mounted oi the through-holes, the at least one hook structure are engaged with an engagement portion (e.g., the engagement portion 1131d) provided around the through-holes.

According to various embodiments, the electronic device further includes a first support plate (e.g., the first support plate 117 in FIG. 13A) disposed on at least a portion of the first housing, and a second support plate (e.g., the second support plate 127 in FIG. 13A) disposed on at least a portion of the second housing, and when the electronic device is in the unfolded state, the first support plate and the second support plate are flush (e.g. co-planar) with each other.

According to various embodiments, the through-holes include a first through-hole (e.g., the first through-hole 115 in FIG. 13A) provided in the first support member and a second through-hole (e.g., the second through-hole 125 in FIG. 13A) provided in the second support member, the first through-hole is disposed to at least partially overlap the first support plate below the first support plate and, and the second through-hole is disposed to at least partially overlap the second support plate below the second support plate.

According to various embodiments, the first support plate is disposed to be rotatable by a predetermined angle with respect to the first housing, and the second support plate is disposed to be rotatable by a predetermined angle with respect to the second housing.

According to various embodiments, the wiring member includes a flexible printed circuit board (FPCB), and a portion bonded to the first inclined surface includes a stiffener (e.g., the stiffener 161 in FIG. 4B).

According to various embodiments, the waterproof member includes a waterproof double-sided tape or adhesive.

According to various embodiments, an electronic device includes a first housing (e.g., the first housing 110 in FIG. 3) including a first support member (e.g., the first support member 1131 in FIG. 3), a second housing (e.g., the second housing 120 in FIG. 3) including a second support member (e.g., the second support member 1231 in FIG. 3), a hinge device (e.g., the hinge device in FIG. 1A) interconnecting the first housing and the second housing to be rotatable relative each other, a flexible display (e.g., the flexible display 130 of FIG. 1A) disposed to be supported by the first housing and the second housing, a wiring member (e.g., the wiring member 160 in FIG. 4B) penetrating through-holes (e.g., the first through-hole 115 and the second through-hole 125 in FIG. 13A) provided in the first support member and including a first inclined surface (e.g., the first inclined surface 1152 in FIG. 4B) and in the second support member, respectively, and disposed to electrically interconnect the first housing and the second housing, a waterproof cover (e.g., the waterproof cover 210 in FIG. 4B) disposed to seal the through-holes, a first waterproof member (e.g., the first waterproof member T1 in FIG. 4B) disposed between the waterproof cover and the through-holes, a second waterproof member (e.g., the second waterproof member T2 in FIG. 4B) disposed between the first inclined surface and the wiring member, and a third waterproof member (e.g., the third waterproof member T3 in FIG. 4B) disposed between the wiring member and the waterproof cover. The wiring member is disposed by being bonded to the first inclined surface via the second and third waterproof members and the waterproof cover.

According to various embodiments, the first inclined surface has an inclination angle other than 90 degrees with respect to the surface of the flexible display when the electronic device is in an unfolded state.

According to various embodiments, the inclination angle of the first inclined surface is in a range larger than 0 degrees and smaller than 90 degrees when the electronic device is in the unfolded state.

According to various embodiments, the waterproof cover includes a plate portion (e.g., the plate portion 211 in FIG. 6A) and a protrusion (e.g., the protrusion 212 in FIG. 6A) protruding from the plate portion, and the protrusion includes a second inclined surface (e.g., the second inclined surface 212a in FIG. 6A) provided at a position corresponding to the first inclined surface, and the wiring member is disposed between the first inclined surface and the second inclined surface.

According to a first example, there is provided an electronic device comprising: a first housing comprising a first support member; a second housing comprising a second support member; a hinge device configured to rotatably connect the first housing and the second housing; a wiring member configured to penetrate a first through-hole provided in the first support member, and electrically interconnect the first housing and the second housing; a waterproof cover arranged to seal the first through-hole; at least one waterproof member disposed in the first through-hole; and wherein the wiring member is bonded to a first inclined surface inside the first through-hole and to the waterproof cover via the at least one waterproof member, and wherein the first inclined surface is inclined with respect to a first support surface of the first support member.

According to a second example, there is provided the electronic device of the first example, further comprising a flexible display disposed to be supported by the first housing and the second housing.

According to a third example, there is provided the electronic device of the second example, wherein, when the electronic device is in an unfolded state, the first inclined surface has an inclination angle: (i) other than 90 degrees with respect to a surface of the flexible display, or (ii) in a range larger than 0 degrees and smaller than 90 degrees with respect to the surface of the flexible display.

According to a fourth example, there is provided the electronic device of one of the first example to the third example, further comprising at least one waterproof filling member configured to seal at least one hole formed in the waterproof cover, wherein the at least one waterproof filling member is disposed to cover an edge of the wiring member.

According to a fifth example, there is provided the electronic device of the fourth example, wherein a flat surface is configured to extend from the first inclined surface inside the first through-hole.

According to a sixth example, there is provided the electronic device of the fifth example, wherein the waterproof cover comprises a plate portion and a protrusion protruding from the plate portion, and wherein the protrusion comprises a second inclined surface at least part of which is provided to face to the first inclined surface.

According to a seventh example, there is provided the electronic device of the sixth example, wherein the wiring member is disposed between the first inclined surface and the second inclined surface; and/or wherein the first inclined surface and the flat surface form part of an interior of the first through-hole.

According to an eighth example, there is provided the electronic device of the sixth example or the seventh example, wherein the waterproof member comprises: a first waterproof member disposed between the plate portion and the flat surface; a second waterproof member disposed between the wiring member and the first inclined surface; and a third waterproof member disposed between the wiring member and the second inclined surface.

According to a ninth example, there is provided the electronic device of the eighth example, wherein the waterproof filling member is disposed to interconnect the first and second waterproof members and the third waterproof member.

According to a tenth example, there is provided the electronic device of the eighth example or the ninth example, wherein the second waterproof member, the wiring member, and the third waterproof member are arranged to have a stepped structure such that respective edges thereof are exposed.

According to an eleventh example, there is provided the electronic device of one of the first example to the tenth example, wherein the waterproof cover comprises at least one hook structure protruding toward the first through-hole, and wherein, when the waterproof cover is mounted in the first through-hole, the at least one hook structure is engaged with an engagement portion provided around the first through-hole.

According to a twelfth example, there is provided the electronic device of one of the first example to the eleventh example, further comprising: a first support plate disposed on at least a portion of the first housing; and a second support plate disposed on at least a portion of the second housing, wherein, when the electronic device is in an unfolded state, the first support plate and the second support plate are flush or co-planar with each other; and/or wherein the first through-hole is disposed to at least partially overlap the first support plate below the first support plate and

According to a thirteenth example, there is provided the electronic device of one of the first example to the twelfth example, wherein the wiring member is configured to penetrate a second through-hole provided in the second support member.

According to a fourteenth example, there is provided the electronic device of the twelfth example or the thirteenth example, wherein the first support plate is disposed to be rotatable by a predetermined angle with respect to the first housing, and wherein the second support plate is disposed to be rotatable by a predetermined angle with respect to the second housing.

According to a fifteenth example, there is provided the electronic device of one of the first example to the fourteenth example, wherein the wiring member comprises a flexible printed circuit board (FPCB), and wherein a portion of the wiring member bonded to the first inclined surface comprises a stiffener.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure.

## Claims

1. An electronic device comprising:
a first housing (110) comprising a first support member (1131);
a second housing (120) comprising a second support member (1231);
a hinge device (HA) configured to rotatably connect the first housing and the second housing;
a wiring member (160) configured to penetrate a first through-hole (115) provided in the first support member, and electrically interconnect the first housing and the second housing;
a waterproof cover (210) arranged to seal the first through-hole; and
at least one waterproof member (T1, T2, T3) disposed in the first through-hole,
**characterized in that**:
the wiring member is bonded to a first inclined surface inside the first through-hole and to the waterproof cover via the at least one waterproof member, and
the first inclined surface is inclined with respect to a first support surface (1131a) of the first support member.

2. The electronic device of claim 1, further comprising a flexible display (130) disposed to be supported by the first housing and the second housing.

3. The electronic device of claim 2, wherein, when the electronic device is in an unfolded state, the first inclined surface has an inclination angle
(i) other than 90 degrees with respect to a surface of the flexible display, or
(ii) in a range larger than 0 degrees and smaller than 90 degrees with respect to the surface of the flexible display.

4. The electronic device of one of claims 1 to 3, further comprising at least one waterproof filling member (T4) configured to seal at least one hole (2111) formed in the waterproof cover (210),
wherein the at least one waterproof filling member is disposed to cover an edge of the wiring member.

5. The electronic device of claim 4, wherein a flat surface (1151) is configured to extend from the first inclined surface inside the first through-hole.

6. The electronic device of claim 5, wherein the waterproof cover comprises a plate portion (211) and a protrusion (212) protruding from the plate portion, and
wherein the protrusion comprises a second inclined surface (212a) at least part of which is provided to face to the first inclined surface.

7. The electronic device of claim 6, wherein the wiring member is disposed between the first inclined surface and the second inclined surface; and/or
wherein the first inclined surface and the flat surface form part of an interior of the first through-hole.

8. The electronic device of claim 6 or 7, wherein the waterproof member comprises:
a first waterproof member (T1) disposed between the plate portion and the flat surface;
a second waterproof member (T2) disposed between the wiring member and the first inclined surface; and
a third waterproof member (T3) disposed between the wiring member and the second inclined surface.

9. The electronic device of claim 8, wherein the waterproof filling member is disposed to interconnect the first and second waterproof members and the third waterproof member.

10. The electronic device of claim 8 or 9, wherein the second waterproof member, the wiring member, and the third waterproof member are arranged to have a stepped structure such that respective edges thereof are exposed.

11. The electronic device of one of claims 1 to 10, wherein the waterproof cover comprises at least one hook structure (223) protruding toward the first through-hole, and
wherein, when the waterproof cover is mounted in the first through-hole, the at least one hook structure is engaged with an engagement portion (1131d) provided around the first through-hole.

12. The electronic device of one of claims 1 to 11, further comprising:
a first support plate (117) disposed on at least a portion of the first housing; and
a second support plate (127) disposed on at least a portion of the second housing,
wherein, when the electronic device is in an unfolded state, the first support plate and the second support plate are flush or co-planar with each other; and/or
wherein the first through-hole is disposed to at least partially overlap the first support plate below the first support plate.

13. The electronic device of one of claims 1 to 12, wherein the wiring member is configured to penetrate a second through-hole (125) provided in the second support member.

14. The electronic device of claim 12 or 13, wherein the first support plate is disposed to be rotatable by a predetermined angle with respect to the first housing, and
wherein the second support plate is disposed to be rotatable by a predetermined angle with respect to the second housing.

15. The electronic device of one of claims 1 to 14, wherein the wiring member comprises a flexible printed circuit board, FPCB, and
wherein a portion of the wiring member bonded to the first inclined surface comprises a stiffener (161).

## Patentansprüche

1. Elektronische Einrichtung, umfassend:
ein erstes Gehäuse (110), das ein erstes Stützelement (1131) umfasst;
ein zweites Gehäuse (120), das ein zweites Stützelement (1231) umfasst;
eine Scharniereinrichtung (HA), die dazu konfiguriert ist, das erste Gehäuse und das zweite Gehäuse drehbar zu verbinden;
ein Verdrahtungselement (160), das dazu konfiguriert ist, ein erstes Durchgangsloch (115) zu durchdringen, das in dem ersten Stützelement bereitgestellt ist, und das erste Gehäuse und das zweite Gehäuse elektrisch miteinander zu verbinden;
eine wasserdichte Abdeckung (210), die so positioniert ist, dass sie das erste Durchgangsloch abdichtet; und
mindestens ein wasserdichtes Element (T1, T2, T3), das in dem ersten Durchgangsloch angeordnet ist,
**dadurch gekennzeichnet, dass**:
das Verdrahtungselement über das mindestens eine wasserdichte Element an eine erste geneigte Oberfläche innerhalb des ersten Durchgangslochs und an die wasserdichte Abdeckung gebunden ist und
die erste geneigte Oberfläche in Bezug auf eine erste Stützoberfläche (1131a) des ersten Stützelements geneigt ist.

2. Elektronische Einrichtung nach Anspruch 1, ferner umfassend eine flexible Anzeige (130), die so angeordnet ist, dass sie durch das erste Gehäuse und das zweite Gehäuse gestützt wird.

3. Elektronische Einrichtung nach Anspruch 2, wobei, wenn die elektronische Einrichtung in einem aufgeklappten Zustand ist, die erste geneigte Oberfläche einen Neigungswinkel aufweist,
(i) der sich von 90 Grad in Bezug auf eine Oberfläche der flexiblen Anzeige unterscheidet oder
(ii) der in einem Bereich liegt, der größer als 0 Grad und kleiner als 90 Grad in Bezug auf die Oberfläche der flexiblen Anzeige ist.

4. Elektronische Einrichtung nach einem der Ansprüche 1 bis 3, ferner umfassend mindestens ein wasserdichtes Füllelement (T4), das dazu konfiguriert ist, mindestens ein Loch (2111), das in der wasserdichten Abdeckung (210) ausgebildet ist, abzudichten,
wobei das mindestens eine wasserdichte Füllelement so angeordnet ist, dass es eine Kante des Verdrahtungselements bedeckt.

5. Elektronische Einrichtung nach Anspruch 4, wobei eine flache Oberfläche (1151) dazu konfiguriert ist, sich von der ersten geneigten Oberfläche innerhalb des ersten Durchgangslochs zu erstrecken.

6. Elektronische Einrichtung nach Anspruch 5, wobei die wasserdichte Abdeckung einen Plattenabschnitt (211) und einen Vorsprung (212) umfasst, der von dem Plattenabschnitt vorsteht, und
wobei der Vorsprung eine zweite geneigte Oberfläche (212a) umfasst, von der mindestens ein Teil so bereitgestellt ist, dass er der ersten geneigten Oberfläche zugewandt ist.

7. Elektronische Einrichtung nach Anspruch 6, wobei das Verdrahtungselement zwischen der ersten geneigten Oberfläche und der zweiten geneigten Oberfläche angeordnet ist; und/oder
wobei die erste geneigte Oberfläche und die flache Oberfläche einen Teil eines Inneren des ersten Durchgangslochs ausbilden.

8. Elektronische Einrichtung nach Anspruch 6 oder 7, wobei das wasserdichte Element Folgendes umfasst:
ein erstes wasserdichtes Element (T1), das zwischen dem Plattenabschnitt und der flachen Oberfläche angeordnet ist;
ein zweites wasserdichtes Element (T2), das zwischen dem Verdrahtungselement und der ersten geneigten Oberfläche angeordnet ist; und
ein drittes wasserdichtes Element (T3), das zwischen dem Verdrahtungselement und der zweiten geneigten Oberfläche angeordnet ist.

9. Elektronische Einrichtung nach Anspruch 8, wobei das wasserdichte Füllelement so angeordnet ist, dass es das erste und das zweite wasserdichte Element und das dritte wasserdichte Element miteinander verbindet.

10. Elektronische Einrichtung nach Anspruch 8 oder 9, wobei das zweite wasserdichte Element, das Verdrahtungselement und das dritte wasserdichte Element so positioniert sind, dass sie eine abgestufte Struktur aufweisen, sodass jeweilige Kanten davon freiliegen.

11. Elektronische Einrichtung nach einem der Ansprüche 1 bis 10, wobei die wasserdichte Abdeckung mindestens eine Hakenstruktur (223) umfasst, die zu dem ersten Durchgangsloch hin vorsteht, und
wobei, wenn die wasserdichte Abdeckung in dem ersten Durchgangsloch montiert ist, die mindestens eine Hakenstruktur mit einem Eingriffsabschnitt (1131d) in Eingriff steht, der um das erste Durchgangsloch herum bereitgestellt ist.

12. Elektronische Einrichtung nach einem der Ansprüche 1 bis 11, ferner umfassend:
eine erste Stützplatte (117), die an mindestens einem Abschnitt des ersten Gehäuses angeordnet ist; und
eine zweite Stützplatte (127), die an mindestens einem Abschnitt des zweiten Gehäuses angeordnet ist,
wobei, wenn die elektronische Einrichtung in einem aufgeklappten Zustand ist, die erste Stützplatte und die zweite Stützplatte bündig oder koplanar miteinander sind; und/oder
wobei das erste Durchgangsloch so angeordnet ist, dass es die erste Stützplatte unter der ersten Stützplatte mindestens teilweise überlappt.

13. Elektronische Einrichtung nach einem der Ansprüche 1 bis 12, wobei das Verdrahtungselement dazu konfiguriert ist, ein zweites Durchgangsloch (125) zu durchdringen, das in dem zweiten Stützelement bereitgestellt ist.

14. Elektronische Einrichtung nach Anspruch 12 oder 13, wobei die erste Stützplatte so angeordnet ist, dass sie um einen vorbestimmten Winkel in Bezug auf das erste Gehäuse drehbar ist, und
wobei die zweite Stützplatte so angeordnet ist, dass sie um einen vorbestimmten Winkel in Bezug auf das zweite Gehäuse drehbar ist.

15. Elektronische Einrichtung nach einem der Ansprüche 1 bis 14, wobei das Verdrahtungselement eine flexible Leiterplatte, FPCB, umfasst und
wobei ein Abschnitt des Verdrahtungselements, der an die erste geneigte Oberfläche gebunden ist, eine Versteifung (161) umfasst.

## Revendications

1. Dispositif électronique comprenant :
un premier boîtier (110) comprenant un premier élément de support (1131) ;
un second boîtier (120) comprenant un second élément de support (1231) ;
un dispositif de charnière (HA) conçu pour raccorder de manière rotative le premier boîtier et le second boîtier ;
un élément de câblage (160) conçu pour pénétrer dans un premier trou traversant (115) prévu dans le premier élément de support, et interconnecter électriquement le premier boîtier et le second boîtier ;
un couvercle étanche (210) agencé pour assurer l'étanchéité du premier trou traversant ; et
au moins un élément étanche (T1, T2, T3) disposé dans le premier trou traversant, **caractérisé en ce que** :
l'élément de câblage est lié à une première surface inclinée à l'intérieur du premier trou traversant et au couvercle étanche par l'intermédiaire d'au moins un élément étanche, et
la première surface inclinée est inclinée par rapport à une première surface de support (1131a) du premier élément de support.

2. Dispositif électronique de la revendication 1, comprenant en outre un dispositif d'affichage souple (130) disposé pour être supporté par le premier boîtier et le second boîtier.

3. Dispositif électronique de la revendication 2, lorsque le dispositif électronique est dans un état déplié, ladite première surface inclinée possédant un angle d'inclinaison
(i) autre que 90 degrés par rapport à une surface du dispositif d'affichage souple, ou
(ii) dans une plage supérieure à 0 degré et inférieure à 90 degrés par rapport à la surface du dispositif d'affichage souple.

4. Dispositif électronique de l'une des revendications 1 à 3, comprenant en outre au moins un élément de remplissage étanche (T4) conçu pour sceller au moins un trou (2111) formé dans le couvercle étanche (210),
ledit au moins un élément de remplissage étanche étant disposé pour recouvrir un bord de l'élément de câblage.

5. Dispositif électronique de la revendication 4, une surface plate (1151) étant conçue pour s'étendre à partir de la première surface inclinée à l'intérieur du premier trou traversant.

6. Dispositif électronique de la revendication 5, ledit couvercle étanche comprenant une partie plaque (211) et une saillie (212) faisant saillie à partir de la partie plaque, et ladite saillie comprenant une seconde surface inclinée (212a) dont au moins une partie est prévue pour faire face à la première surface inclinée.

7. Dispositif électronique de la revendication 6, ledit élément de câblage étant disposé entre la première surface inclinée et la seconde surface inclinée ; et/ou
ladite première surface inclinée et ladite surface plate formant une partie d'un intérieur du premier trou traversant.

8. Dispositif électronique de la revendication 6 ou 7, ledit élément étanche comprenant :
un premier élément étanche (T1) disposé entre la partie de plaque et la surface plate ;
un deuxième élément étanche (T2) disposé entre l'élément de câblage et la première surface inclinée ; et
un troisième élément étanche (T3) disposé entre l'élément de câblage et la seconde surface inclinée.

9. Dispositif électronique de la revendication 8, ledit élément de remplissage étanche étant disposé pour interconnecter les premier et deuxième éléments étanches et le troisième élément étanche.

10. Dispositif électronique de la revendication 8 ou 9, ledit second élément étanche, ledit élément de câblage et ledit troisième élément étanche étant agencés pour présenter une structure étagée de sorte que leurs bords respectifs soient exposés.

11. Dispositif électronique de l'une des revendications 1 à 10, ledit couvercle étanche à l'eau comprenant au moins une structure de crochet (223) faisant saillie vers le premier trou traversant, et
lorsque le couvercle étanche est monté dans le premier trou traversant, ladite au moins une structure de crochet étant en prise avec une partie de mise en prise (1131d) prévue autour du premier trou traversant.

12. Dispositif électronique de l'une des revendications 1 à 11, comprenant en outre :
une première plaque de support (117) disposée sur au moins une partie du premier boîtier ; et
une seconde plaque de support (127) disposée sur au moins une partie du second boîtier,
lorsque le dispositif électronique est dans un état déplié, ladite première plaque de support et ladite seconde plaque de support étant affleurantes ou coplanaires l'une avec l'autre ; et/ou
ledit premier trou traversant étant disposé pour chevaucher au moins partiellement la première plaque de support en dessous de la première plaque de support.

13. Dispositif électronique de l'une des revendications 1 à 12, ledit élément de câblage
étant conçu pour pénétrer dans un second trou traversant (125) prévu dans le second élément de support.

14. Dispositif électronique de la revendication 12 ou 13, ladite première plaque de support étant disposée pour être rotative d'un angle prédéfini par rapport au premier boîtier, et
ladite seconde plaque de support étant disposée pour être rotative d'un angle prédéfini par rapport au second boîtier.

15. Dispositif électronique de l'une des revendications 1 à 14, ledit élément de câblage
comprenant une carte de circuit imprimé souple, FPCB, et
une partie de l'élément de câblage liée à la première surface inclinée comprenant un raidisseur (161).
